# EUROPEAN PATENT APPLICATION

(11) **EP 1 659 765 A1**
(43) Date of publication of application: **24.05.2006**
(21) Application number: 05703939.8
(22) Date of filing: 20.01.2005
(51) Int. Cl.: H04M 1/02, H04M 11/00

(54) **MOBILE COMMUNICATION TERMINAL CASING, MOBILE COMMUNICATION TERMINAL, SERVER APPARATUS, AND MOBILE COMMUNICATION SYSTEM**

(30) Priority: 21.01.2004 JP 2004013591; 21.01.2004 JP 2004013615; 02.03.2004 JP 2004057090
(71) Applicant: Vodafone K.K., Minato-ku, Tokyo 1056205 (JP)
(72) Inventor: SHIBATA, Junji, 1056205 (JP)
(74) Representative: Grünecker, Kinkeldey, Stockmair & Schwanhäusser Anwaltssozietät
(86) International application number: PCT/JP2005/000711
(87) International publication number: WO 2005/071927

(57) **Abstract**

The present invention provides a mobile communication terminal casing and a mobile communication terminal which are capable of displaying an image that can be made to function as the external design of the mobile communication terminal, and with which the image made to function as the external design can be easily changed or appropriately displayed, and a server apparatus providing data to the mobile communication terminal, and a mobile communication system comprising the mobile communication terminal and the server apparatus.

A display panel made of electronic paper is provided on externally exposed portion of the present mobile communication terminal (mobile phone). This display panel forms a casing image displaying unit 217 and a casing image based on image data in accordance with a command from a main control unit 215.

## Description

### Technical Field

The present invention relates to a mobile communication terminal casing, a mobile communication terminal having the casing, a server apparatus that provides data to the mobile communication terminal, and a mobile communication system including the mobile communication terminal and the server apparatus.

### Background Art

The casing surface of a mobile communication terminal has various designs provided thereon. Since the design of the casing surface exerts a great influence on the external design of the mobile communication terminal, many users recognize the design as fashion or an interior accessory. Thus, there is a strong demand from users who want to easily change the external design of their mobile communication terminals to one that matches their preferences. In response to the demand, conventionally, several techniques for easily changing the external design of a mobile communication terminal have been proposed.
For example, for a mobile phone (mobile communication terminal), a technique that allows for a so-called replaceable design is suggested in which a transparent accessory is detachably provided onto a part of a casing of the mobile phone and an image on a sheet inserted between the accessory and the casing is allowed to be viewed from the outside through the accessory (Patent Document 1). In the mobile phone, by changing the sheet attached to the phone body to another sheet having a different image, the external design of the mobile phone can be changed. In addition, for example, a technique for changing the external design of a mobile phone by changing a surface cover that covers a casing surface of the mobile phone to another surface cover has been proposed. Further, for example, Patent Document 2 discloses a mobile phone having a liquid crystal display mounted on an operation/display panel side of a casing of the mobile phone. In the mobile phone, by changing image data of an image displayed on the liquid crystal display, a user can easily change the image display on the liquid crystal display.

Patent Document 1: Japanese Unexamined Patent Application Publication No. 2003- 143280
Patent Document 2: Japanese Unexamined Patent Application Publication No. 2003- 61139

### Disclosure of the Invention

### Problems to be Solved by the Invention

In the mobile phone disclosed in the Patent Document 1, however, changing of the external design of the mobile phone requires another sheet or surface cover (replacement part). Therefore, the user always needs to have a replacement part when changing the external design. As a result, when, for example, the user attempts to change the external design at a place outside his/her home, the user needs to bring a replacement part with him/her to the place. Further, when the user feels like changing the external design, a situation may occur in which the user is unable to change the external design because he/she does not have a replacement part on hand. Thus, the conventional technique is far from user-friendly. Moreover, the conventional technique forces the user to perform a complicated task of changing a replacement part, when changing the external design of the mobile phone. The point that the user is forced to perform such a complicated task is also one of the reasons that the technique is far from user-friendly.
Not only in the case of changing the external design of a mobile phone, but also in the case of applying the conventional technique widely to a case of changing the external design of a mobile communication terminal, similarly, the technique is far from user-friendly.

In contrast to this, in the mobile phone disclosed in the Patent Document 2, as described above, by changing data of an image, the user can easily change the image displayed on a liquid crystal display of the mobile phone. Hence, just by the user performing a simple task of changing the displayed image on the liquid crystal display, the user can conveniently change the appearance of the mobile phone. However, making the displayed image on the liquid crystal display of the mobile phone function as an external design that is recognized as fashion or the like is difficult in practice, the point of which will be specifically explained below. To make the displayed image function as an external design that is recognized as fashion or the like, the image composing the external design needs to be continuously displayed for a sufficiently long time. However, the liquid crystal display cannot display an image unless power is supplied thereto. Therefore, to make the displayed image on the liquid crystal display function as an external design that is recognized as fashion or the like, the power supply to the liquid crystal display needs to be continuously performed for a long period of time. However, generally, mobile phones have a constraint that unnecessary power consumption should be minimized so that the primary functions, such as call, arithmetic processing of data, and data communications, can be exerted for as long a time as possible. Thus, a continuous power supply to the liquid crystal display for a long period of time so that an image that functions as an external design recognized as fashion or the like can be continuously displayed for a long period of time, significantly reduces the time for the mobile phone to exert its primary functions; accordingly, it is extremely difficult in practice. Not only in mobile phones but also in other mobile communication terminals having display means which cannot display an image unless power is supplied thereto, making the image displayed on the display means function as an external design that is recognized as fashion or the like is difficult in practice.

The present invention is made in view of the above-described background. The present invention provides a mobile communication terminal casing capable of displaying an image that can be made to function as the external design of a mobile communication terminal, and with which the image made to function as the external design can be easily changed or appropriately displayed, and a mobile communication terminal having such a mobile communication terminal casing.
Furthermore, the present invention provides a server apparatus that provides data to the mobile communication terminal, and a mobile communication system including the mobile communication terminal and the server apparatus.

### Means for Solving the Problems

A mobile communication terminal casing according to the present invention is a mobile communication terminal casing for forming an external wall portion of a mobile communication terminal, said mobile communication terminal casing comprising: non-power-supplied image display means provided in at least a part of a portion that is exposed externally when being provided to the mobile communication terminal, and being capable of maintaining a display state of an image even in a non-power-supplied state; and signal receiving means that receives an electrical signal for allowing an image to be displayed on the non-power-supplied image display means.
In this mobile communication terminal casing, the display state of an image displayed on the non-power-supplied image display means is maintained even in a non-power-supplied state. Thus, by providing the casing to a mobile communication terminal, an image can be continuously displayed on a part of the external wall portion of the mobile communication terminal for a long period of time without consuming power. Accordingly, the image displayed on the non-power-supplied image display means can be made to function as the external design of the mobile communication terminal that is recognized as fashion or the like. Moreover, in the present mobile communication terminal casing, the image to be displayed on the non-power-supplied image display means with the casing being provided to the mobile communication terminal is displayed by an electrical signal received by the signal receiving means. Therefore, without the need for a user to perform a replacement task of removing the casing of a mobile communication terminal and mounting another casing replacement part, by signal processing by which an electrical signal received by the signal receiving means of the mobile communication terminal casing is changed, the image displayed on the non-power-supplied image display means can be easily changed to another image, and thereby the external design can be changed. As described above, in the present mobile communication terminal casing, an image that can be made to function as the external design of the mobile communication terminal can be displayed; moreover, the image functioning as the external design can be easily changed.

A mobile communication terminal according to the present invention is a mobile communication terminal comprising: a casing forming an external wall portion; and memory means that memorizes therein image data; wherein non-power-supplied image display means capable of maintaining, even in a non-power-supplied state, a display state of an image which is based on image data memorized in the memory means is provided in at least a part of an externally exposed portion of the casing.
In this mobile communication terminal, the display state of an image displayed on the non-power-supplied image display means provided in the externally exposed portion of the casing is maintained even in a non-power-supplied state. Hence, without consuming power, an image can be continuously displayed in a part of the external wall portion of the casing for a long period of time. Accordingly, an image displayed on the non-power-supplied image display means can be made to function as the external design of the mobile communication terminal that is recognized as fashion or the like. Moreover, in the present mobile communication terminal, since the image displayed on the non-power-supplied image display means is based on image data memorized in the memory means, by changing image data memorized in the memory means, the image displayed on the non-power-supplied image display means can be easily changed to another image, and thereby the external design can be changed. As described above, in the present mobile communication terminal, an image that can be made to function as the external design can be displayed; moreover, the image functioning as the external design can be easily changed.

In the above-described mobile communication terminal, it is preferable that the terminal further comprises display control means that performs display control to change an image displayed on the non-power-supplied image display means.
In this mobile communication terminal, the image displayed on the non-power-supplied image display means can be changed to another image by the display control means. The display control may be performed based on a user operation, or may be performed automatically by predetermined steps, independent of a user operation. For example, when the display control of the display control means is configured to be performed according to a user operation, just by the user performing a simple operation for allowing the display control means to perform display control, the external design of the mobile communication terminal can be changed. Alternatively, when the display control is configured to be performed automatically, independent of a user operation, without the user performing any operation the external design of the mobile communication terminal can be changed every certain period of time, for example.

Further, in the above-described mobile communication terminal, it is preferable that the terminal further comprise image data selection and storage means that selects a piece of image data that matches an appearance of the external wall portion from a plurality of pieces of image data memorized in an external memory medium, and then stores the selected image data in the memory means.
In this mobile communication terminal, image data that matches the appearance of the external wall portion of the mobile communication terminal can be appropriately acquired from the external memory medium. The usability of this will be explained below. Generally, the shape and dimensions (appearance) of an external wall portion of a mobile communication terminal vary from model to model. Accordingly, the shape and dimensions of a display area of non-power-supplied image display means provided to a casing forming the external wall portion also vary from model to model. Hence, even when an image of the same type is displayed on non-power-supplied image display means, data of the image varies depending on the model of a mobile communication terminal. Thus, even for an image of the same type, different pieces of image data need to be used depending on the type of mobile communication terminal. When non-power-supplied image display means is provided only in a part of an externally exposed portion of a casing, even in the same model, the color, pattern, or the like (appearance) of other portion where the non-power-supplied image display means is not provided may be made different from others. In view of enhancing the quality of design of the external design, it is desirable that an image suitable for the color, pattern, or the like of the other portion be displayed on the non-power-supplied image display means. Thus, even when an image of the same type is displayed on non-power-supplied image display means of the same model, it may be necessary to use different pieces of image data depending on the color, pattern, or the like of the other portion. Hence, in the present mobile communication terminal, from a plurality of pieces of image data memorized in an external memory medium, a piece of image data that matches the appearance of an external wall portion of the mobile communication terminal is selected and acquired. Accordingly, even if image data that matches the appearance of the external wall portion of the mobile communication terminal and image data that does not match the appearance are memorized in the external memory medium, the image data that matches the appearance of the external wall portion of the mobile communication terminal can be appropriately acquired from the external memory medium.

Moreover, in the above-described mobile communication terminal, it is preferable that the terminal further comprises image data acquisition and storage means that acquires image data of an image according to an image acquisition request via the communication network, by sending an image acquisition request to a server apparatus having an external memory medium via the communication network and then stores the image data in the memory means, wherein the image data acquisition and storage means sends an appearance identification information for identifying appearance of the external wall portion to the server apparatus via the communication network, when acquiring the image data.
In this mobile communication terminal, since image data of an image to be displayed on the non-power-supplied image display means can be acquired via the communication network, the acquisition of the image data becomes very easy. In addition, in the present mobile communication terminal, upon the acquisition of the image data, appearance identification information is sent to the server apparatus via the communication network. Therefore, it becomes possible for the server apparatus side to identify the appearance of the external wall portion of a mobile communication terminal that is the source of a request for image data. Accordingly, the server apparatus can be allowed to send image data that matches the appearance of the external wall portion identified by the appearance identification information, and the present mobile communication terminal can appropriately acquire image data that matches the appearance of the external wall portion of the mobile communication terminal.

In the above-described mobile communication terminal, it is preferable that the terminal comprises processing means that processes image data memorized in the memory means in accordance with the appearance of the external wall portion, and that an image based on the image data processed by the processing means is displayed on the non-power-supplied image display means.
In this mobile communication terminal, as described above, even when an image of the same type is displayed on the non-power-supplied image display means, it is necessary to use image data individually according to the model of the mobile communication terminal. Further, as described above, even in the same model, when the color, pattern, or the like (appearance) of the other portion where the non-power-supplied image display means is not provided is different from others, image data suitable for the color, pattern, or the like of the other portion may be individually used. However, allowing the image creator side that creates image data of images displayed on the non-power-supplied image display means, to prepare multiple pieces of image data for an image of the same type results in forcing the image creator side to perform a complicated task. This may reduce the number of types of images created by the image creator, which may lead to a possible reduction in the number of types of images available to mobile communication terminals. Hence, in the present mobile communication terminal, image data memorized in the memory means is processed to match the appearance of the external wall portion of the mobile communication terminal. By doing so, the image creator side does not need to create different pieces of image data individually for different models of mobile communication terminals or different colors, patterns, or the like of the other portion, when creating an image. As a result, the creation of a wide variety of images can be expected.

A server apparatus according to the present invention is a server apparatus for sending image data memorized in image data memory means to a mobile communication terminal via a communication network; wherein the image data memory means memorizes a plurality of pieces of image data corresponding to a plurality of mobile communication terminals having external wall portions of which appearances are different from one another respectively, for an image of a same type; and the server apparatus comprising image data reading means for reading image data of an image according to an image acquisition request corresponding to an mobile communication terminal from the image data memory means, based on the image acquisition request received from the mobile communication terminal via the communication network and an appearance identification information for identifying the appearance of external wall portion of the mobile communication terminal, and image data sending means for sending the image data read by said image data reading means to the mobile communication terminal via the communication network.
In this server apparatus, image data of an image according to an image acquisition request from a mobile communication terminal can be sent to the mobile communication terminal via the communication network. This makes the acquisition of the image data very easy. For a method of acquiring image data of an image that serves as the external design of a user's mobile communication terminal, a method may be considered in which a portable external memory medium, such as a memory medium, that memorizes the image data is purchased and the image data is read and acquired from the medium. This method, however, requires the user to purchase a portable external memory medium by going to a distributor, or by establishing a purchasing procedure through the Internet and having the medium mailed to the user, and furthermore, requires a very cumbersome task which involves a task of reading the image data from the purchased medium to the mobile communication terminal. On the other hand, with the use of the present server apparatus, the user can acquire image data of an image to be displayed on the non-power-supplied image display means just by performing a predetermined operation on the mobile communication terminal, making the acquisition of image data very easy.
In addition, the present server apparatus can receive appearance identification information for identifying the appearance of an external wall portion of a mobile communication terminal, read image data that matches the mobile communication terminal from the image data memory means based on the appearance identification information, and send the image data to the mobile communication terminal. Thus, just by adding a simple configuration for sending the appearance identification information to a mobile communication terminal, it is possible to display, on non-power-supplied image display means of each mobile communication terminal, an image suitable for the appearance of an external wall portion of that mobile communication terminal.

As described above, even when an image of the same type is displayed on the non-power-supplied image display means, it is necessary to use image data individually according to the model of the mobile communication terminal. Further, as described above, even in the same model, when the color, pattern, or the like (appearance) of the other portion where the non-power-supplied image display means is not provided is different from others, it is desirable that image data suitable for the color, pattern, or the like of the other portion be individually used. As in a mobile communication terminal having the processing means, by allowing image data to be processed on the mobile communication terminal side, as described above, it is possible to prevent the image creator side from being forced to perform a complicated task. This, however, is premised on the assumption that all mobile communication terminals that receive image data from the server apparatus have the processing means. Namely, if, among mobile communication terminals that receive image data from the server apparatus, there is a mobile communication terminal that does not have the processing means, the mobile communication terminal cannot display, even if acquiring image data from the server apparatus, the image on the non-power-supplied image display means such that the image is suitable for the appearance of the external wall portion of the mobile communication terminal.
In view of this, another server apparatus according to the present invention is a server apparatus for sending image data memorized in image data memory means to a mobile communication terminal via a communication network, the server apparatus comprising: image data processing means for processing image data of an image according to an image acquisition request in accordance with an appearance of external wall portion of the mobile communication terminal which is identified by an appearance identification information, based on the image acquisition request received from the mobile communication terminal via the communication network and the appearance identification information for identifying the appearance of external wall portion of the mobile communication terminal, and image data sending means foe sending the image data processed by the image data processing means to the mobile communication terminal via the communication network.
The server apparatus processes image data according to an image acquisition request from a mobile communication terminal to match the appearance of an external wall portion of the mobile communication terminal, and thereafter, sends the processed image data to the mobile communication terminal. Accordingly, if mobile communication terminals that receive image data from the present server apparatus are configuredato send appearance identification information, it becomes possible to provide to all of the mobile communication terminals image data that matches the appearances of external wall portions of the respective mobile communication terminals, without forcing the image creator side to perform a complicated task. Compared with the case of, as in a mobile communication terminal having the processing means, changing or adding software to enable image data processing, it is far easier to change the software so that appearance identification information can be sent from a mobile communication terminal.

A mobile communication system according to the present invention is a mobile communication system comprising a mobile communication terminal and a server apparatus that sends image data memorized in image data memory means to the mobile communication terminal via a communication network: wherein the mobile communication terminal comprising; non-power-supplied image display means that is provided in at least a part of an externally exposed portion of a casing forming an external wall portion, and is capable of maintaining a display state of an image which is based on image data memorized in the memory means even in a non-power-supplied state; display control means that performs display control to change an image displayed on the non-power-supplied image display means; data acquiring means that sends an image acquisition request to the server apparatus via the communication network and receives image data of an image according to the image acquisition request from the server apparatus via the communication network; and data storage means that stores the image data acquired by the image data acquiring means in said memory means: and the server apparatus is configured to read image data of an image according to the image acquisition request received from the mobile communication terminal via the communication network, from the image data storage means, and to send the image data to the mobile communication terminal via the communication network.
A mobile communication terminal in this mobile communication system can display an image which is based on image data on non-power-supplied image display means provided in an externally exposed portion of a casing. Since the display state of the image displayed on the non-power-supplied image display means can be maintained even in a non-power-supplied state, the image can be made to function as the external design of the mobile communication terminal that is recognized as fashion or the like. Moreover, in the mobile communication terminal, the image displayed on the non-power-supplied image display means is based on image data memorized in the memory means, and by the display control means the image displayed on the non-power-supplied image display means can be easily changed to another image. Accordingly, for example, by allowing the display control of the display control means to be performed according to a user operation, just by the user performing a simple operation for allowing the display control means to perform display control, the external design of the mobile communication terminal can be changed. Alternatively, other than by a user operation, for example, by allowing the display control of the display control means to be performed every certain period of time, without the user performing any operation the external design of the mobile communication terminal can be changed every certain period of time.
Moreover, in the present mobile communication system, image data of an image according to an image acquisition request from a mobile communication terminal can be sent to the mobile communication terminal from the server apparatus via the communication network. Thus, image data of an image displayed on the non-power-supplied image display means can be easily acquired.

Another mobile communication terminal according to the present invention is a mobile communication terminal comprising: a casing forming an external wall portion; memory means that memorizes image data; and control means that executes a program and performs control in accordance with a content of the program; wherein non-power-supplied image display means is provided in at least a part of an externally exposed portion of the casing, which is capable of maintaining, even in a non-power-supplied state, a display state of an image which is based on image data memorized in the memory means; the image data is memorized in the memory means in a state such that the image data is associated with a specific program executable by the control means; and the control means performs a control to read the image data associated with the specific program from the memory means and display an image which is based on the image data on the non-power-supplied image display means, during execution of the specific program.
In this mobile communication terminal, the display state of an image displayed on the non-power-supplied image display means provided in the externally exposed portion of the casing is maintained even in a non-power-supplied state. Thus, an image can be continuously displayed on a part of the external wall portion of the mobile communication terminal for a long period of time without consuming power. Accordingly, the image displayed on the non-power-supplied image display means can be made to function as the external design of the mobile communication terminal that is recognized as fashion or the like. Moreover, in the present mobile communication terminal, while the control means is executing a specific program, an image based on image data associated with the specific program is displayed on the non-power-supplied image display means. Hence, the external design of the mobile communication terminal can be made to be related to the specific program being executed by the control means of the mobile communication terminal. As described above, in the present mobile communication terminal, an image that can be made to function as the external design can be appropriately displayed so as to be related to the specific program.

In the above-described mobile communication terminal, it is preferable that the terminal comprises image data acquisition and storage means that acquires image data of an image displayed on the non-power-supplied image display means wherein the image data is associated with the specific program, when acquiring the specific program from an external memory medium, from the external memory medium or another external memory medium, and then stores the image data in the memory means.
In this mobile communication terminal, when acquiring a specific program, image data of an image to be displayed on the non-power-supplied image display means during the execution of the program can be acquired together with the specific program. This allows an image intended by the developer of a specific program to be appropriately displayed as the external design of the mobile communication terminal during the execution of the specific program.

Furthermore, another mobile communication terminal according to the present invention is a mobile communication terminal comprising: a casing forming an external wall portion; and memory means that memorizes image data; wherein power-supplied image display means is provided in at least a part of an externally exposed portion of the casing, which cannot maintain, in a non-power-supplied state, a display state of an image; non-power-supplied image display means is provided in at least a part of an externally exposed portion of the casing, which is capable of maintaining, even in a non-power-supplied state, a display state of an image which is based on image data memorized in the memory means; the image data is memorized in the memory means in a state such that the image data is associated with an image displayed on the power-supplied image display means; and the mobile communication terminal includes a control means for performing a control to read image data associated with the image from the memory means and display an image which is based on the image data on the non-power-supplied image display means, during an image is displayed on the power-supplied image display means.
In this mobile communication terminal, the image displayed on the non-power-supplied image display means can be made to function as the external design of the mobile communication terminal that is recognized as fashion or the like. Moreover, the present mobile communication terminal includes, apart from the non-power-supplied image display means, power-supplied image display means, such as a liquid crystal display, that is generally included in publicly known mobile communication terminals. When an image is displayed on the power-supplied image display means, another image based on image data associated with the image is displayed on the non-power-supplied image display means. Thus, the external design of the mobile communication terminal can be made to be related to the image displayed on the power-supplied image display means such as a liquid crystal display. As described above, in the present mobile communication terminal, an image that can be made to function as the external design can be appropriately displayed so as to be related to an image displayed on the power-supplied image display means such as a liquid crystal display.

In the above-described mobile communication terminal, it is preferable that the terminal comprises image data acquisition and storage means for acquiring image data of an image displayed on the non-power-supplied image display means wherein the image data is associated with the image data, when acquiring image data of an image to be displayed on the power-supplied image display means from an external memory medium, from the external memory medium or another external memory medium, and for storing the image data in the memory means.
In this mobile communication terminal, when acquiring an image to be displayed on the power-supplied image display means such as a liquid crystal display, it is possible to acquire, together with image data of the image, image data of an image to be displayed on the non-power-supplied image display means when the image is displayed on the power-supplied image display means. Accordingly, when an image is displayed on the power-supplied image display means, another image intended by the provider of the image can be appropriately displayed as the external design of the mobile communication terminal.

Furthermore, another server apparatus according to the present invention is a server apparatus for sending data memorized in data memory means to a mobile communication terminal having the foregoing image data acquisition and storage means via a communication network: wherein the data memory means memorizes data of the specific program and image data of an image to be displayed on the non-power-supplied image display means in a state such that the image data is associated with the data of the specific program; and the server apparatus includes data sending means for reading data of a specific program according to the program acquisition request and image data associated with the data of the specific program from the data memory means, in response to a program acquisition request received from the mobile communication terminal via the communication network, and for sending the read data to the mobile communication terminal via the communication network.
In this server apparatus, in response to a program acquisition request from a mobile communication terminal, not only a specific program according to the request but also image data of an image to be displayed on the non-power-supplied image display means of the mobile communication terminal while the specific program is executed by the mobile communication terminal can be sent. This allows an image intended by the developer of a specific program to be appropriately displayed as the external design of the mobile communication terminal during the execution of the specific program.
In a mobile communication system including such mobile communication terminal and server apparatus, an image intended by the developer of a specific program can be appropriately displayed as the external design of the mobile communication terminal while the specific program is executed by the mobile communication terminal.

Furthermore, another server apparatus according to the present invention is a server apparatus for sending data memorized in data memory means to a mobile communication terminal having the foregoing image data acquisition and storage means via a communication network: wherein the data memory means memorizes image data of an image to be displayed on the power-supplied image display means and image data of an image to be displayed on the non-power-supplied image display means in a state such that the image data of an image to be displayed on the non-power-supplied image display means is associated with the image data of an image to be displayed on the power-supplied image display means; and the server apparatus includes data sending means for reading, from the data memory means, image data according to an image acquisition request and image data of an image displayed on the non-power-supplied image display means wherein the image data of the image is associated with the image data according to the image acquisition request, in response to the image acquisition request received from the mobile communication terminal via the communication network for image data of an image to be displayed on the power-supplied image display means, and for sending the read data to the mobile communication terminal via the communication network.
In this server apparatus, in response to an image acquisition request from a mobile communication terminal, not only image data according to the request but also image data of another image to be displayed on the non-power-supplied image display means of the mobile communication terminal when an image based on the image data according to the request is displayed on the power-supplied, image display means of the mobile communication terminal, can be sent. Accordingly, when an image is displayed on the power-supplied image display means of the mobile communication terminal, another image intended by the provider of the image can be appropriately displayed as the external design of the mobile communication terminal.
In a mobile communication system including such mobile communication terminal and server apparatus, when an image is displayed on the power-supplied image display means of the mobile communication terminal, another image intended by the provider of the image can be appropriately displayed as the external design of the mobile communication terminal.

Furthermore, another mobile communication terminal according to the present invention is a mobile communication terminal comprising: a casing forming an external wall portion; and memory means that memorizes image data; wherein non-power-supplied image display means capable of maintaining a display state of an image which is based on image data memorized in the memory means, even in a non-power-supplied state, is provided in a part of an externally exposed portion of the casing: and the mobile communication terminal includes: appearance identification information memory means for memorizing appearance identification information for identifying a pattern or a color or a combination thereof of the other portion of the casing; and image data selection and storage means for selecting, from a plurality of pieces of image data memorized in an external memory medium so as to be associated with the appearance identification information, a piece of image data corresponding to the appearance identification information memorized in the appearance identification information memory means, and for storing the selected image data in the memory means.
In this mobile communication terminal, the display state of an image displayed on the non-power-supplied image display means provided in a part of the externally exposed portion of the casing is maintained even in a non-power-supplied state. Hence, an image can be continuously displayed on a part of the external wall portion of the mobile communication terminal for a long period of time without consuming power. Accordingly, the image displayed on the non-power-supplied image display means can be made to function as the external design of the mobile communication terminal that is recognized as fashion or the like. In addition, in the present mobile communication terminal, since the image displayed on the non-power-supplied image display means is based on image data memorized in the memory means, by using, for the non-power-supplied image display means, one that is capable of changing the display state of an image, the image displayed on the non-power-supplied image display means can be easily changed to another image.
Furthermore, in the present mobile communication terminal, it is possible to select, from a plurality of pieces of image data memorized in an external memory medium, a piece of image data that matches the pattern or color or a combination thereof (hereinafter referred to as the "color or the like") of the other portion of the casing of the mobile communication terminal where the non-power-supplied image display means is not provided. Then, an image based on the selected image data can be displayed on the non-power-supplied image display means. Thus, an image in harmony with the color or the like of the other portion of the casing can be displayed on the non-power-supplied image display means. Accordingly, the external design of the mobile communication terminal can be made to have a sense of unity as a whole. As such, in the present mobile communication terminal, an image that can be made to function as the external design can be appropriately displayed so that the appearance of the mobile communication terminal has, as a whole, a sense of unity.

Furthermore, another communication terminal according to the present invention is a communication terminal comprising: a casing forming an external wall portion; and memory means that memorizes image data; wherein non-power-supplied image display means capable of maintaining, even in a non-power-supplied state, a display state of an image which is based on image data memorized in the memory means is provided in a part of an externally exposed portion of the casing: and the mobile communication terminal includes: processing means that processes image data memorized in the memory means to add or change at least one of a pattern and a color of the image data, wherein an image based on the image data processed by the processing means is displayed on the non-power-supplied image display means.
In this mobile communication terminal, to display on the non-power-supplied image display means an image in harmony with the color or the like of the other portion of the casing of the mobile communication terminal, for a single image design, different pieces of image data suitable for different colors or the like of the other portions of the casings of mobile communication terminals need to be memorized in an external memory medium. However, allowing the image creator side that creates these pieces of image data to prepare different pieces of image data for a single image design such that the pieces of image data correspond to mobile communication terminals, respectively, results in forcing the image creator side to perform a complicated task. This may reduce the number of types of images created by the image creator, which may lead to a possible reduction in the number of types of images available to mobile communication terminals. On the other hand, in the present mobile communication terminal, image data can be processed, on the mobile communication terminal side, to match the color or the like of the other portion of the casing of the mobile communication terminal. Accordingly, in the present mobile communication terminal, image in harmony with the color or the like of the other portion of the casing can be displayed on the non-power-supplied image display means, and the external design of the mobile communication terminal can be made to have a sense of unity as a whole. As such, in the present mobile communication terminal, an image that can be made to function as the external design can be appropriately displayed so that the appearance of the mobile communication terminal has a sense of unity as a whole. In addition, the image creator side does not need to create different pieces of image data for a single image design based on different mobile communication terminals, when creating an image; as a result, the creation of a wide variety of images can be expected.

Furthermore, another mobile communication terminal according to the present invention is a communication terminal comprising: a casing forming an external wall portion; and memory means that memorizes image data, wherein non-power-supplied image display means capable of maintaining, even in a non-power-supplied state, a display state of an image which is based on image data memorized in the memory means is provided in a part of an externally exposed portion of the casing; the mobile communication terminal includes image data acquisition and storage means for acquiring image data of an image according to an image acquisition request via the communication network, by sending via a communication network the image acquisition request to a server apparatus having an external memory medium, and for storing the image data in the memory means; wherein the image data acquisition and storage means sends, when acquiring the image data, appearance identification information for identifying a pattern or a color or a combination thereof of other portion of the casing, to the server apparatus via the communication network.
In this mobile communication terminal, since image data of an image to be displayed on the non-power-supplied image display means can be acquired via the communication network, the acquisition of the image data becomes very easy. For a method of acquiring, by a user, image data of an image that serves as the external design of the user's mobile communication terminal, a method may be considered in which a portable external memory medium, such as a memory medium, that memorizes the image data is purchased and the image data is read and acquired from the medium. This method, however, requires the user to purchase a portable external memory medium by going to a distributor, or by establishing a purchasing procedure through the Internet and having the medium mailed to the user, and furthermore, requires a very cumbersome task which involves a task of reading the image data from the purchased medium to the mobile communication terminal. On the other hand, with the use of the present mobile communication terminal, the user can acquire image data of an image to be displayed on the non-power-supplied image display means just by performing a predetermined operation, making the acquisition of image data very easy.
In addition, in the present mobile communication terminal, upon the acquisition, appearance identification information is sent to a server apparatus via the communication network. Hence, on the server apparatus side, the color or the like of the other portion of the casing of the mobile communication terminal that is the source of the request for image data can be identified. Thus, the server apparatus can be allowed to send image data that matches the color or the like of the other portion of the casing which is identified by the appearance identification information. Accordingly, in the present mobile communication terminal, an image in harmony with the color or the like of the other portion of the casing can be displayed on the non-power-supplied image display means. Accordingly, the external design of the mobile communication terminal can be made to have a sense of unity as a whole. As such, in the present mobile communication terminal, an image that can be made to function as the external design can be appropriately displayed so that the appearance of the mobile communication terminal has a sense of unity as a whole.

Furthermore, another server apparatus according to the present invention is a server apparatus for sending image data memorized in image data memory means to a mobile communication terminal having the foregoing image data acquisition and storage means via a communication network: wherein the image data memory means memorizes therein a plurality of pieces of image data in a state such that the pieces of image data are associated with the appearance identification information, respectively: and the server apparatus includes: image data reading means that reads, based on the image acquisition request received from the mobile communication terminal via the communication network and the appearance identification information, image data of an image according to the image acquisition request which corresponds to the appearance identification information, from the image data memory means; and image data sending means for sending the image data read by the image data reading means to the mobile communication terminal via the communication network.
In this server apparatus, image data of an image according to an image acquisition request from a mobile communication terminal having the image data acquisition and storage means can be sent to the mobile communication terminal via the communication network. This makes the acquisition of the image data very easy. For a method of acquiring, by a user, image data of an image that serves as the external design of the user's mobile communication terminal, a method may be considered in which a portable external memory medium, such as a memory medium, that memorizes the image data is purchased and the image data is read and acquired from the medium. This method, however, requires the user to purchase a portable external memory medium by going to a distributor, or by establishing a purchasing procedure through the Internet and having the medium mailed to the user, and furthermore, requires a very cumbersome task which involves a task of reading the image data from the purchased medium to the mobile communication terminal. On the other hand, with the use of the present server apparatus, the user can acquire image data of an image to be displayed on the rion-power-supplied image display means just by performing a predetermined operation on the mobile communication terminal, making the acquisition of image data very easy.
In addition, the present server apparatus can receive appearance identification information for identifying the appearance of an external wall portion of a mobile communication terminal, read image data that matches the mobile communication terminal from the image data memory means based on the appearance identification information, and send the image data to the mobile communication terminal. Thus, just by adding a simple configuration for sending the appearance identification information to a mobile communication terminal, it is possible to display, on non-power-supplied image display means of each mobile communication terminal, an image suitable for the pattern, color, or the like of the other portion of the casing of that mobile communication terminal.

Furthermore, another server apparatus according to the present invention is a server apparatus for sending image data memorized in image data memory means to a mobile communication terminal having the foregoing image data acquisition and storage means via a communication network, the server apparatus comprising: image data processing means for performing a process for image data of an image according to an image acquisition request, based on the image acquisition request received from the mobile communication terminal via the communication network and the appearance identification information, to add or change at least one of a pattern and a color of the image data; and image data sending means for sending the image data processed by the image data processing means to the mobile communication terminal via the communication network.
In a server apparatus including the image data memory means, image data reading means, and image data sending means, to display on non-power-supplied image display means an image in harmony with the color or the like of the other portion of the casing, for a single image design, different pieces of image data suitable for different colors or the like of the other portions of the casings of mobile communication terminals need to be memorized in the image data memory means. However, allowing the image creator side who creates these pieces of image data to prepare different pieces of image data for a single image design such that the pieces of image data correspond to mobile communication terminals, respectively, results in forcing the image creator side to perform a complicated task, as described above. This may reduce the number of types of images created by the image creator, which may lead to a possible reduction in the number of types of images available to mobile communication terminals. As in a mobile communication terminal having the foregoing processing means, by allowing image data to be processed on the mobile communication terminal side, as described above, it is possible to prevent the image creator side from being forced to perform a complicated task. This, however, is premised on the assumption that all mobile communication terminals that receive image data from the server apparatus have the processing means. Namely, if, among mobile communication terminals that receive image data from the server apparatus, there is a mobile communication terminal that does not have the processing means, the mobile communication terminal cannot display, even if acquiring image data from the server apparatus, the image on the non-power-supplied image display means such that the image is suitable for the pattern, color, or the like of the other portion of the casing of the mobile communication terminal.
In the present server apparatus, image data of an image according to an image acquisition request from a mobile communication terminal can be processed, on the server apparatus side, to match the pattern, color, or the like of the other portion of the casing of the mobile communication terminal, and thereafter, the processed image data can be sent to the terminal. Accordingly, if mobile communication terminals that receive image data from the present server apparatus are added with a simple configuration of sending appearance identification information, it becomes possible to provide to all of the mobile communication terminals image data that matches the colors or the like of the other portions of the casings of the respective mobile communication terminals, without forcing the image creator side to perform a complicated task. Compared with the case of changing or adding software to enable image data processing as in a mobile communication terminal having the processing means, it is far easier to change the software so that appearance identification information can be sent from a mobile communication terminal.

Another mobile communication system according to the present invention is a mobile communication system comprising: a mobile communication terminal having the processing means; and a server apparatus having the image data memory means, the image data reading means, and the image data sending means.
Furthermore, another mobile communication system according to the present invention is a mobile communication system comprising: a mobile communication terminal having the processing means; and a server apparatus having the image data memory means, the image data processing means, and the image data sending means.

The above-described "mobile communication terminals" include mobile phones of the PDC (Personal Digital Cellular) system, the GSM (Global System for Mobile Communications) system, the TIA (Telecommunications Industry Association) system, and the like, mobile phones standardized by IMT (International Mobile Telecommunications)-2000, mobile phones of the TD-SCDMA (MC: Multi Carrier) system which is one of the TD-SCDMA (Time Division Synchronous Code Division Multiple Access) systems, PHSs (Personal Handyphone Systems), car phones, and the like. The "mobile communication terminals" also include, in addition to the phones, mobile information communication terminals with no phone functionality such as PDAs (Personal Digital Assistance).

### Effects of the Invention

According to the present invention, an image that can be made to function as the external design of a mobile communication terminal can be displayed, and moreover, the image that is made to function as the external design can be easily changed or appropriately displayed.

### Brief Description of Drawings

FIG. 1 is an illustrative diagram for explaining the overall configuration of a mobile communication system according to a first embodiment of the present invention.
FIG. 2 is a schematic configuration diagram showing a hardware configuration of a download server which can be used in the mobile communication system.
FIG. 3A is a front side view showing an appearance of a mobile phone which can be used in the mobile communication system.
FIG. 3B is a back side view showing an example of the back side of the mobile phone.
FIG. 3C is a back side view showing another example of the back side of the mobile phone.
FIG. 4 is a schematic configuration diagram showing a hardware configuration of the mobile phone.
FIG. 5 is a cross-sectional view of a casing showing a configuration example of a display panel of the mobile phone.
FIG. 6A is a cross-sectional view of a casing showing another configuration example of the display panel of the mobile phone.
FIG. 6B is an illustrative diagram showing operating principles of the display panel.
FIG. 7 is a block diagram showing an extracted main portion of a mobile phone composing the mobile communication system.
FIG. 8 is an illustrative diagram of a software structure of the mobile phone.
FIG. 9 is a sequence flow diagram of an operation example 1-1 of the mobile phone.
FIG. 10A is a back side view of the mobile phone shown in FIG. 3B on which a casing image for a mobile phone shown in FIG. 3C is displayed.
FIG. 10B is a back side view of the mobile phone shown in FIG. 3C on which the casing image is displayed.
FIG. 11 is a sequence flow diagram of an operation example 1-2.
FIG. 12 is a sequence flow diagram of an operation example 1-3.
FIG. 13 is a sequence flow diagram of an operation example 1-4.
FIG. 14 is a flowchart showing a flow of control in an operation example 2-1 of a mobile phone composing a mobile communication system according to a second embodiment.
FIG. 15 is a sequence flow diagram of application program acquisition in the operation example 2-1.
FIG. 16 is a flowchart showing a flow of control in an operation example 2-2.
FIG. 17 is a sequence flow diagram of standby image acquisition in the operation example 2-2.
FIG. 18 is a sequence flow diagram according to an operation example 3-1 of a mobile phone composing a mobile communication system of a third embodiment of the present invention.
FIG. 19A is a back side view of a mobile phone showing a state in which a casing image for a mobile phone is displayed.
FIG. 19B is a back side view of a mobile phone showing a state in which another casing image for a mobile phone is displayed.
FIG. 19C is a back side view of a mobile phone showing a state in which still another casing image for a mobile phone is displayed.
FIG. 20 is a sequence flow diagram of an operation example 3-2.
FIG. 21A is a diagram showing a casing image before processing.
FIG. 21B is a diagram showing a casing image after processing.
FIG. 21C is a diagram showing another casing image after processing.
FIG. 22 is a sequence flow diagram of an operation example 3-3.
FIG. 23 is a sequence flow diagram of an operation example 3-4.

### Description of Reference Numerals

- 10: MOBILE PHONE COMMUNICATIONS NETWORK
- 11: DOWNLOAD SERVER
- 20: MOBILE PHONE
- 27: LCD
- 29: BACKSIDE LCD
- 30A, 30B: CASING
- 31: TRANSPARENT LOWER BASE LAYER
- 32: IMAGE RECORDING LAYER
- 33: TRANSPARENT UPPER BASE LAYER
- 34: PROTECTIVE LAYER
- 35: LOWER GRID ELECTRODE
- 36: UPPER GRID ELECTRODE
- 207: DISPLAY CONTROL DEVICE
- 208: DISPLAY PANEL
- 214: APPLICATION PROGRAM EXECUTING AND MANAGING UNIT
- 215: MAIN CONTROLLING UNIT
- 217: CASING IMAGE DISPLAYING UNIT

### Best Mode for Carrying Out the Invention

[Embodiment 1]
First, a first embodiment of the present invention will be explained.

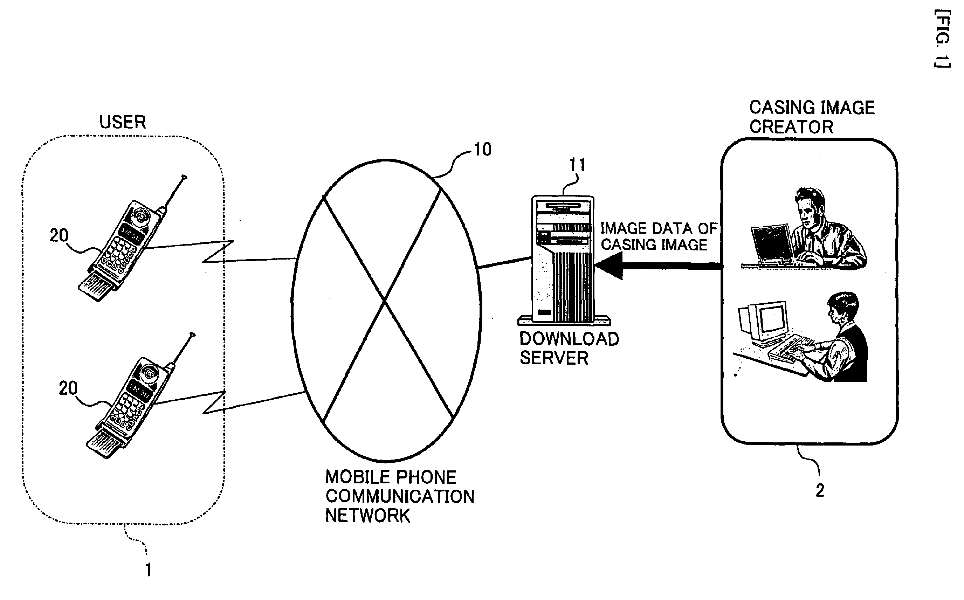

FIG. 1 is an illustrative diagram for explaining the overall configuration of a mobile communication system which can be used by a mobile phone serving as a mobile communication terminal, according to the first embodiment (hereinafter referred to as "Embodiment 1") of the present invention.
In the mobile communication system, a mobile phone 20 used by a user 1 has a configuration capable of executing an application program registered by the user 1. In the present embodiment, the application program is developed by platform-independent object-oriented programming. Such application programs include an application program written in JAVA (registered trademark), an application program that operates in a BREW (registered trademark) application execution environment, and the like. The mobile phone 20 can be connected to a mobile phone communication network 10 serving as a communication network. To the mobile phone communication network 10 is connected an image data download server (hereinafter referred to as the "download server") 11 serving as a server apparatus (image providing server). When receiving a download request from the mobile phone 20, the download server 11 sends image data according to the request to the mobile phone 20. In addition, when receiving a download request from the mobile phone 20, the download server 11 also functions as an application program providing server that sends an application program according to the request to the mobile phone 20.

Image data of a casing image to be provided from the download server 11 is provided from a creator 2 of the casing image. Specifically, for example, image data is uploaded via a leased line or a public line to the download server 11 from a personal computer or the like on the side of the creator 2, and thereby the image data is provided. Image data may be provided such that a recording medium, such as an optical disk or a magnetic disk, having recorded thereon created image data of casing images is sent from the creator 2 to a communication common carrier who manages and runs the download server 11 and then the image data on the recording medium is read by the download server 11. The image data provided in this way is registered on the download server 11 in a state such that the mobile phone 20 can download the image data via the mobile phone communication network 10.
An application program to be provided from the download server 11 is provided from an application program developer which is not shown. The application program provided from the developer is, as is the image data of a casing image, registered on the download server 11 in a state such that the mobile phone 20 can download the application program via the mobile phone communication network 10.

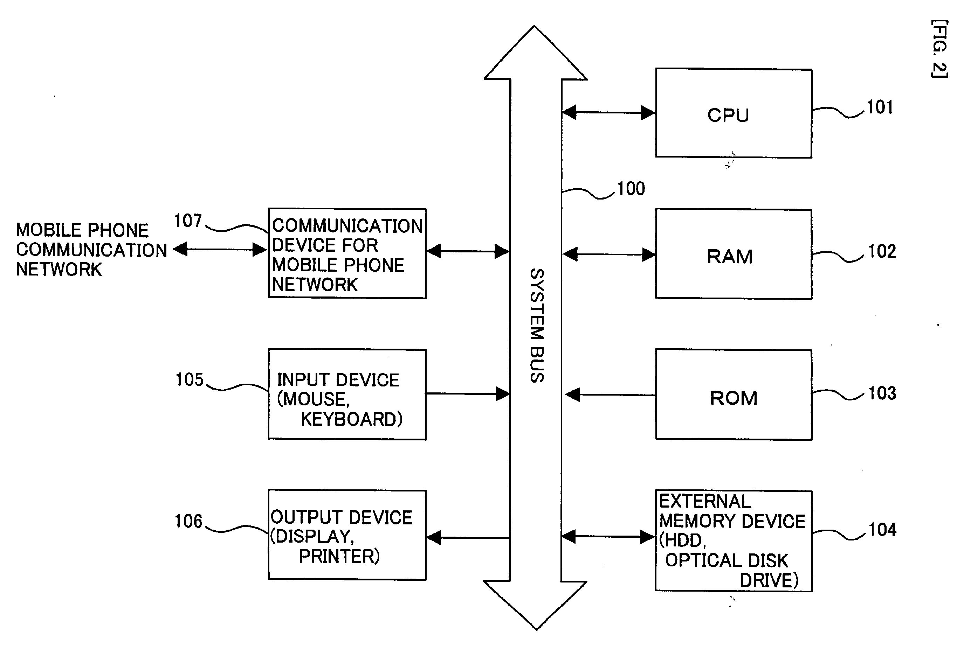

FIG. 2 is a schematic configuration diagram showing a hardware configuration of the download server 11. The download server 11 includes a system bus 100, a CPU 101, an internal memory device, an external memory device 104 serving as an external memory medium, an input device 105, and an output device 106. The internal memory device is composed of RAM 102, ROM 103, and the like. The external memory device is composed of a hard disk drive (HDD), an optical disk drive, and the like. The input device 105 is composed of the external memory device 104, a mouse, a keyboard, and the like. The output device 106 is composed of a display, a printer, and the like. Further, the download server 11 includes a communication device 107 for a mobile phone communication network, for establishing communications with a mobile phone 20 of each user 1 via the mobile phone communication network 10.
The components such as the CPU 101 and the RAM 102 exchange with each other data, instructions of a program, etc., via the system bus 100. A program that allows the download server 11 to operate in accordance with predetermined steps is memorized in the ROM 103 or the external memory device 104, and is called, when necessary, in a work area of the CPU 101 or of the RAM 102 and executed. In the download server 11, image data of casing images and application programs which are to be provided to mobile phones 20 are memorized in the external memory device 104. The download server 11 has a function of sending, in response to a download request from a mobile phone 20, image data or an application program memorized in the external memory device 104 to the mobile phone 20 via the mobile phone communication network 10, in cooperation with the CPU 101, the RAM 102, the communication device 107 for a mobile phone communication network, and the like. The download server 11 may be configured as a dedicated control device, or may be configured using a general-purpose computer system. In addition, the download server 11 may be composed of a single computer or a plurality of computers having their respective functions that are connected to each other via a network.

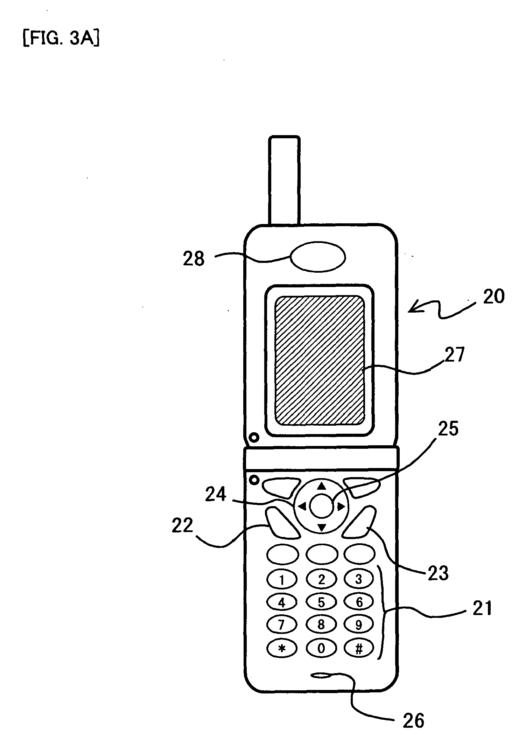

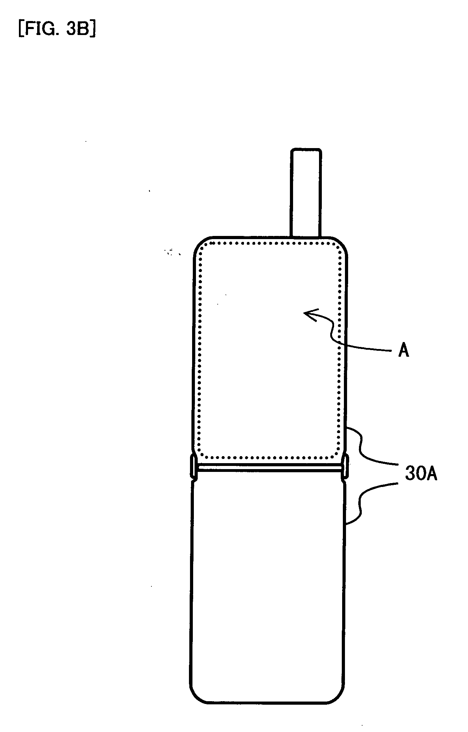

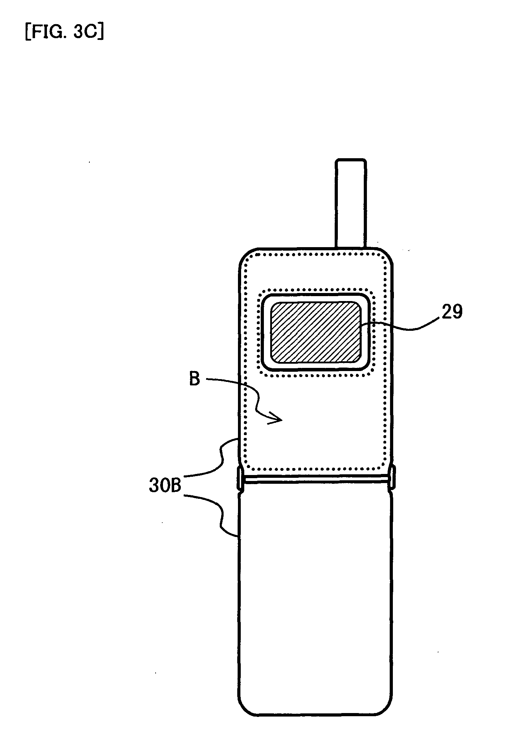

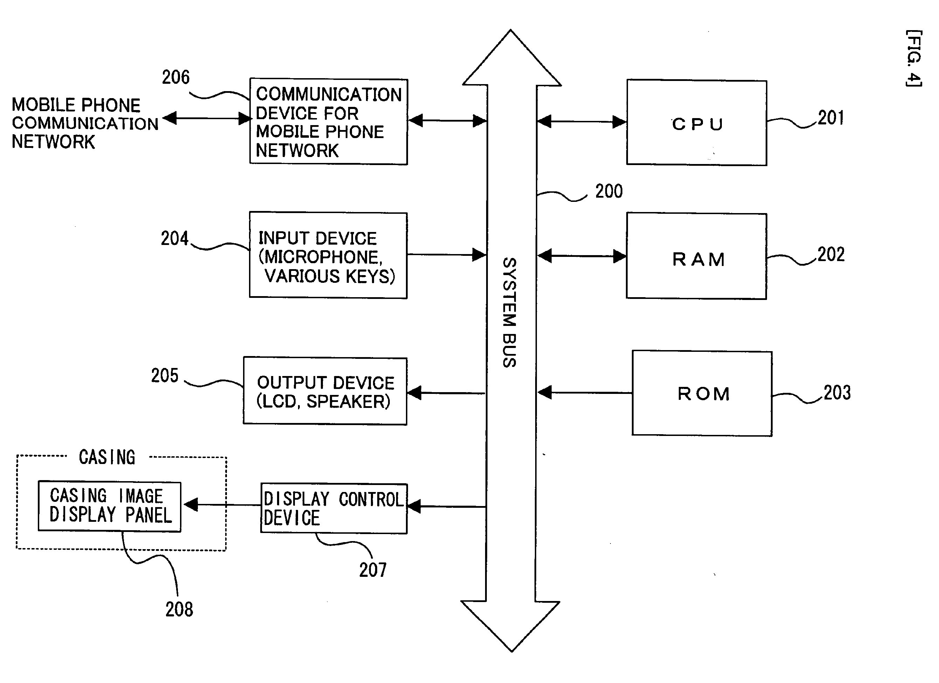

FIG. 3A is a front side view showing an appearance of the mobile phone 20, FIG. 3B is a back side view showing an example of the back side of the mobile phone 20, and FIG. 3C is a back side view showing another example of the back side of the mobile phone 20. FIG. 4 is a schematic configuration diagram showing a hardware configuration of the mobile phone 20.
The mobile phone 20 is a clam-shell (folding) type mobile phone. The mobile phone 20 includes, inside a casing 30A/30B which composes an external wall portion, a system bus 200, a CPU 201, an internal control device composed of RAM 202, ROM 203, and the like, an input device 204, an output device 205, a communication device 206 for a mobile phone communication network, and a display control device 207 serving as the display control means. A casing image display panel (hereinafter referred to as the "display panel") 208 serving as the image display means is provided in a part of an externally exposed portion of the casing 30A/30B. Portions enclosed by dotted lines in FIG. 3B and FIG. 3C indicate display areas A and B of the display panels 208, respectively.

The components such as the CPU 201 and RAM 202 exchange with each other various data, instructions of a program which will be described later, etc., via the system bus 200. The input device 204 is composed of data entry keys (a numeric keypad, * key, and # key) 21, a call start key 22, a call end key 23, a scroll key 24, a multifunction key 25, a microphone 26, and the like. The output device 205 is composed of a liquid crystal display (LCD) 27 serving as the power-supplied image display means (information display means), a speaker 28, and the like. When, as shown in FIG. 3C, the back side also has a display (backside LCD) 29 serving as the power-supplied image display means, the backside LCD 29 composes the output device 205. The communication device 206 for a mobile phone communication network establishes communications with other mobile phones or the download server 11 via the mobile phone communication network 10. In the RAM 202, there are a platform memory area serving as the first memory means which is managed by a phone platform, as will be described later, and an application memory area serving as the second memory means which is managed by an application execution environment, as will be described later.

The display control device 207 performs display control on a display image to be displayed on the display panel 208 which is provided to the casing 30A/30B. The display control device 207 allows a casing image to be displayed on the display panel 208 based on image data of casing images memorized in the RAM 202 serving as the memory means, in accordance with a display control instruction sent from the CPU which composes the control means together with the display control device 207. An electrical signal outputted to the display panel 208 from the display control device 207 is inputted to the display panel 208 through a signal terminal (not shown) which is provided to the casing 30A/30B and serves as the signal receiving means. When the electrical signal is inputted to the display panel 208, a casing image according to the electrical signal is displayed on the display area A/B of the display panel 208.

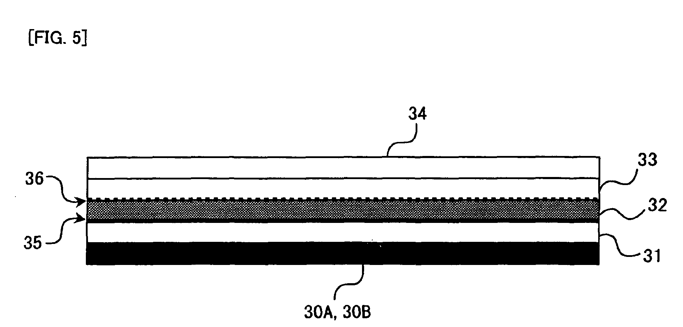

FIG. 5 is a cross-sectional view of the casing 30A/30B which shows the configuration of the display panel 208. The display panel 208 according to the present embodiment is so-called electronic paper, and is attached onto the casing 30A/30B. Specifically, the display panel 208 has, as shown in the drawing, a four-layer structure including a transparent lower base layer 31, an image recording layer 32, a transparent upper base layer 33, and a protective layer 34. A lower grid electrode 35 is provided on the top of the transparent lower base layer 31, i.e., on the outer side of the mobile phone 20, and an upper grid electrode 36 is provided underneath the transparent upper base layer 33, i.e., on the inner side of the mobile phone 20. The lower grid electrode 35 is composed of multiple electrical wires extending parallel to each other in a horizontal direction of the mobile phone 20 (in the horizontal direction in FIG. 3A to FIG. 3C), and an end of each electrical wire is connected to a signal terminal connected to the display control device 207. The upper grid electrode 36 is composed of multiple electrical wires extending parallel to each other in a vertical direction of the mobile phone 20 (in the vertical direction in FIG. 3A to FIG. 3C), and an end of each electrical wire is similarly connected to the signal terminal. As such, the lower grid electrode 35 and the upper grid electrode 36 are disposed over the entire display area A/B of the display panel 208 such that the directions in which the electrical wires of the lower grid electrode 35 and the upper grid electrode 36 extend are orthogonal to each other. By inputting an electrical signal of appropriate ON/OFF timing from the display control device 207, an electric potential difference at a given point in the display area A/B between an electrical wire of the lower grid electrode 35 and an electrical wire of the upper grid electrode 36 can be controlled.

For the image recording layer 32, one can be used that is capable of controlling, by an electric potential difference applied between the lower grid electrode 35 and the upper grid electrode 36, the visible state of a point where the electric potential difference is applied, and that can maintain the visible state of the point even if there is no electrical signal input from the display control device 207.
For the image recording layer 32, one can be used in which, for example, multiple white particles and black particles are encapsulated in a transparent microcapsule and the microcapsule is arranged at all points (pixels points) where the electrical wires of the lower grid electrode 35 and the electrical wires of the upper grid electrode 36 cross each other. In this case, white particles and black particles in each microcapsule carry opposite electrical charges. In the present embodiment, a negatively charged substance is used for the white particles, and a positively charged substance is used for the black particles. Thus, when an electrical signal is inputted from the display control device 207 and the electric potential of the lower grid electrode 35 at a given pixel point has a negative polarity and the electric potential of the upper grid.electrode 36 at the given pixel point has a positive polarity, in a microcapsule at the given pixel point black particles are electrophoresed toward the side of the upper grid electrode 36 and white particles are electrophoresed toward the side of the lower grid electrode 35. As a result, when this pixel point is viewed from the outside of the mobile phone 20, the pixel point is seen as black. By contrast, when the electric potential of the lower grid electrode 35 has a positive polarity and the electric potential of the upper grid electrode 36 has a negative polarity, the pixel point is seen as white. By performing such display control on the entire display area A/B, a desired monochrome image can be displayed on the display area A/B. Moreover, the disposition of black particles and white particles in each microcapsule is maintained even if there is no electrical signal input from the display control device 207. Accordingly, the present display panel 208 can maintain an image once displayed as it is, even in a non-power-supplied state. In addition, a monochrome image of multiple tones can also be displayed according to an electrical signal inputted from the display control device 207.

In the present embodiment, a monochrome image is described; however, it is also possible to display a color image. A specific example of displaying a color image includes one in which a color filter layer is provided between the transparent upper base layer 33 and the protective layer 34. When three color filters of R (red), G (green), and B (blue) are used as the color filter layer, among points at which the electrical wires of the lower grid electrode 35 and the electrical wires of the upper grid electrode 36 cross each other, three points adjacent to one another are treated as a single pixel. The color filter layer is provided such that R, G, and B filter portions oppose the three points, respectively. Accordingly, for example, when a given pixel is made to be red, an electrical signal is inputted so that in a microcapsule opposing the R filter portion white particles are electrophoresed toward the side of the upper grid electrode 36, and in microcapsules opposing the G filter portion and the B filter portion black particles are electrophoresed toward the side of the upper grid electrode 36.

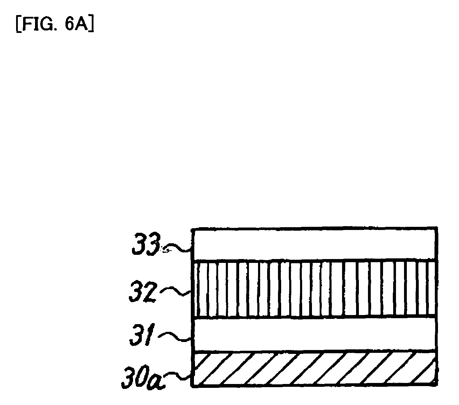

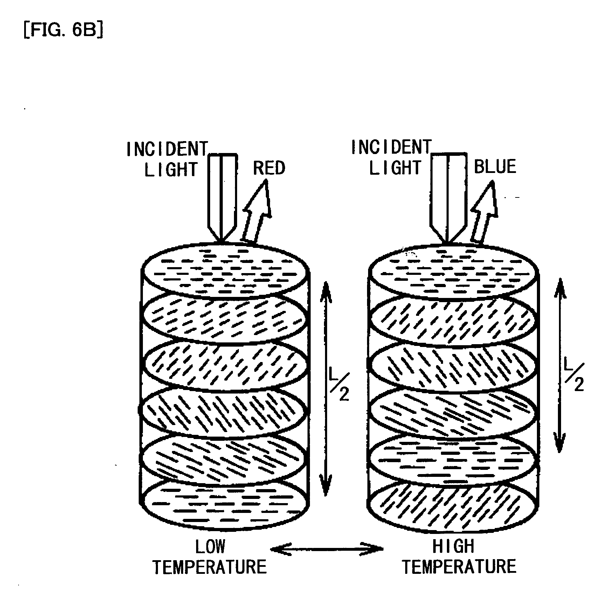

FIG. 6A is a cross-sectional view of a casing 30a which shows the configuration of the display panel 208 according to another configuration example.
The display panel 208 is attached onto a top casing 30a. For the display panel 208 of the present embodiment, an electronic paper using a cholesteric liquid crystal is used. The electronic paper has a cholesteric liquid crystal 32 interposed between two glass plates 31 and 33. The cholesteric liquid crystal 32 enables full-color representation by allowing, as shown in FIG. 6B, a light of a wavelength, among incident lights, which is determined by the spiral period L of molecular arrangement to be selectively reflected. Generally, since the spiral period L of molecular arrangement is reduced as the temperature is increased, a desired color can be represented by temperature control. In addition, by rapidly cooling the cholesteric liquid crystal 32, the spiral period L of molecular arrangement can be fixed. Hence, after the spiral period L is fixed, the color can be fixed. Having such characteristics, an electronic paper using the cholesteric liquid crystal 32 consumes power for temperature control when displaying an image, but can continuously display with no power an image once displayed.

For the display panel 208 usable in the present invention, other publicly known electronic paper and the like can be used as long as one is capable of changing a displayed image and of maintaining the display state of a displayed image even in a non-power-supplied state. For example, other electronic papers using a ferroelectric liquid crystal can also be used.

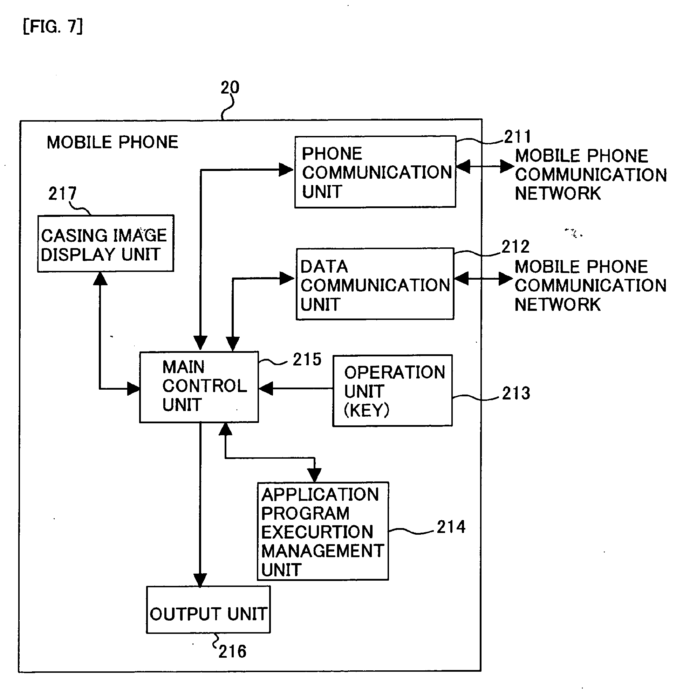

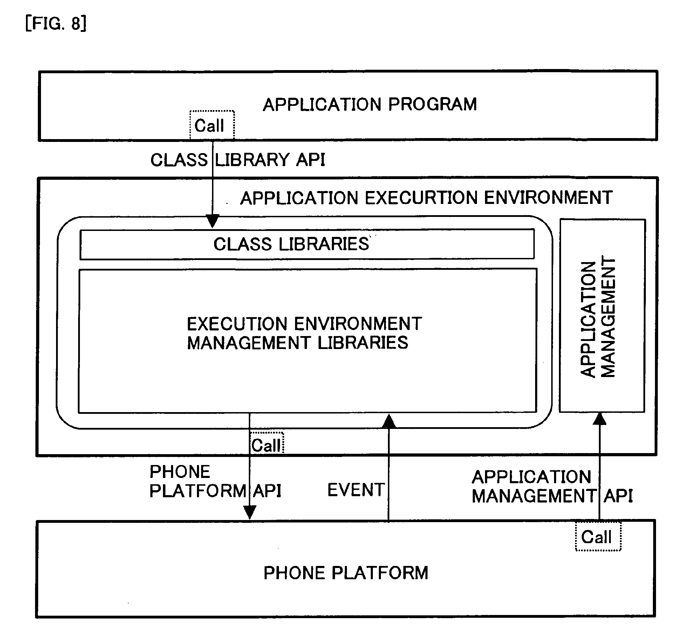

FIG. 7 is a block diagram showing an extracted main portion of the mobile phone 20, and FIG. 8 is an illustrative diagram of a software structure of the mobile phone 20.
The mobile phone 20. includes a phone communication unit 211 and a data communication unit 212 which serve as the radio communication means; an operating unit 213 serving as the operation means; an application program execution management unit 214 serving as the application program execution means; a main controlling unit 215; an output unit 216; a casing image displaying unit 217; and the like.

The phone communication unit 211 performs radio communications with a base station of the mobile phone communication network 10 to perform phone communications with another mobile phone or a fixed-line phone. The phone communication unit 211 corresponds to the communication device 206 for a mobile phone communication network, etc., in the hardware configuration.
The data communication unit 212 corresponds to the communication device 206 for a mobile phone communication network, etc., in the hardware configuration, as in the phone communication unit 211. The data communication unit 212 exchanges emails with other mobile phones via the mobile phone communication network 10, or establishes a connection to an external communication network, such as the Internet, from the mobile phone communication network 10 via a gateway server and exchanges emails on the Internet or browses Web pages, for example. In addition, the data communication unit 212 is also used to download, via the mobile phone communication network 10, image data of a casing image or an application program which are provided by the download server 11.
The operating unit 213 includes the numeric keypad 21, the call start key 22, the call end key 23, and the like, which can be operated by the user 1. By operating the operating unit 213, the user can input data, such as a URL, to the mobile phone 20, start and end a call upon incoming call, or select, start, and stop an application program. Further, by the user operating the operating unit 213, the user can download image data of a casing image or an application program from the download server 11.

The application program execution management unit 214 includes the system bus 200, the CPU 201, a part of the RAM 202, and the like. The application program execution management unit 214 corresponds to the "application execution environment" shown in the center of the software structure in FIG. 8. The application program execution management unit 214 provides software, such as a class library, an execution environment management library, and an application management, which is used for an application program developed by object-oriented programming, and manages the execution environment of the application program. The application execution environment is selected appropriately according to the application program to be executed. For example, when the application program to be executed is written in JAVA (registered trademark), a JAVA (registered trademark) application execution environment is selected. When the application program to be executed is written in C that operates in a BREW (registered trademark) execution environment, a BREW (registered trademark) application execution environment is selected. When the application program to be executed is written in JAVA (registered trademark), by further constructing the JAVA (registered trademark) application execution environment in the BREW (registered trademark) application execution environment, the application program can be executed.
The application program can be used by calling, via a class library API (application interface), a class library of functions, etc., in the application execution environment. The history of calls to the class library of functions, etc., is memorized in an application memory area in the RAM 202 until a virtual execution environment (virtual machine: VM) for the application program is terminated. The application execution environment also stores in the application memory area various data to be used upon executing the application program. When the various data is used, the various data is read or written from/into the application memory area. An execution environment management library in the application execution environment can be used by calling, via a phone platform API, a phone platform library in a phone platform, as will be described later.

The main controlling unit 215 controls the phone communication unit 211, the data communication unit 212, the operating unit 213, and the casing image displaying unit 217, and includes the system bus 200, the CPU 201, the RAM 202, and the like. The main controlling unit 215 exchanges with the application program execution management unit 214 control instructions or various data, and performs control in cooperation with these. The main controlling unit 215 corresponds to the "phone platform" shown at the bottom of the software structure in FIG. 8. The main controlling unit 215 executes a control program for controlling the phone communication unit 211 or the like, or a user interface, or provides a phone platform library. The phone platform can execute various processes in an application program by sending an event to the execution environment management library in the application execution environment, or call, via an application management API, software of application management in the application execution environment and use the software. When the application execution environment calls a phone platform library via a phone platform API and uses the phone platform library, the phone platform executes a process according to the phone platform library. For example, the phone platform can read, based on an instruction from the application execution environment using a phone platform library, data memorized in the platform memory area in the RAM 202 which is managed by the phone platform, and shift the read data to the application memory area.

The output unit 216 is configured with, for example, the output device 205 comprising the LCD 27, the speaker 28, the backside LCD 29 for the mobile phone shown in FIG. 3C, or the like. The output unit 216 allows a Web page screen received by the data communication unit 212 to be displayed on the LCD 27. The LCD 27 and the backside LCD 29 of the output unit 216 are used to notify the user that incoming information is received by the phone communication unit 211 or the data communication unit 212. Specifically, when receiving such information, the main controlling unit 215 allows an incoming-information notification image to be displayed on the LCD 27 or the backside LCD 29 of the output unit 216, or allows a ring tone to be outputted from the speaker 28. Further, the output unit 216 is also used to perform, during the execution of an application program to be executed in the application execution environment, a display of a menu screen, etc., or an output of music which is related to the program execution.

The casing image displaying unit 217 includes the display control device 207, the display panel 208, and the like. The casing image displaying unit 217 operates under control of the main controlling unit 215, and allows a casing image to be displayed on the display panel 208. Specifically, when a given casing image is displayed, the main controlling unit 215 reads image data of the casing image from the RAM 202, and outputs a display control instruction based on the image data to the casing image displaying unit 217. The casing image displaying unit 217 having received the display control instruction outputs an electrical signal for allowing the casing image based on the image data to be displayed on the display panel 208, to the display panel 208 from the display control device 207. Then, when the casing image is displayed on the display panel 208, the main controlling unit 215 stops outputting the electrical signal.

When the casing image (first casing image) being displayed on the display panel 208 is changed to another casing image (second casing image), first, the user 1 operates the keys of the operating unit 213 to cause a casing image selection screen for selecting a casing image to be displayed now, to be displayed on the LCD 27. On the casing image selection screen, the user 1 selects his/her desired casing image using the scroll key 24, and presses the multifunction key 25. In doing so, the operation content is inputted to the main controlling unit 215. The main controlling unit 215 reads from the RAM 202 image data (second image data) of the casing image selected by the user 1, and outputs to the casing image displaying unit 217 a display control instruction which is based on the image data. The casing image displaying unit 217 having received the display control instruction outputs an electrical signal for allowing the casing image based on the image data to be displayed on the display panel 208, to the display panel 208 from the display control device 207, and thereafter, stops outputting the electrical signal. Accordingly, the casing image displayed on the display panel 208 can be changed to another casing image that the user 1 desires.

When the casing image being displayed on the display panel 208 is changed to another casing image in accordance with the content of an application program, the operation is as follows. First, the user 1 downloads and obtains from the download server 11 an application program that can control a casing image to be displayed on the display panel 208, and registers the application program. Specifically; the user 1 operates the keys of the operating unit 213 to access the download server 11. Accordingly, a download selection screen for selecting a downloadable application program is displayed on the LCD 27. Then, on the download selection screen, the user 1 selects an application program to be executed using the scroll key 24, and presses the multifunction key 25, whereby the main controlling unit 215 controls the data communication unit 212 and downloads the application program from the download server 11. The application program downloaded in this way is memorized in the RAM 102 by the main controlling unit 215. When executing the application program downloaded in this way, the user 1 operates the keys of the operating unit 213 to select an application program to be executed, and performs an execution instruction operation. In doing so, an application-program execution instruction is inputted to the phone platform shown in FIG. 8, i.e., the main controlling unit 215 shown in FIG. 7. Accordingly, the main controlling unit 215 reads and starts an application program for panoramic shooting. When a display control instruction is sent from the application program to the application execution environment shown in FIG. 8, i.e., the application program execution management unit 214 shown in FIG. 7, the application program execution management unit 214 sends a display control instruction to the main controlling unit 215 of the phone platform. The main controlling unit 215 having received the instruction reads image data (second image data) according to the display control instruction from the RAM 202. The image data is one that is downloaded and memorized in the RAM 202 together with the application program, when downloading the application program. Thereafter, as in the above, the main controlling unit 215 outputs a display control instruction which is based on the image data to the casing image displaying unit 217. Accordingly, the casing image being displayed on the display panel 208 is changed to another casing image in accordance with the content of the application program.

As such, in the present embodiment, since the casing image can be changed in accordance with the content of an application program, during the execution of the application program, the external design of a mobile phone can be made to be associated with the content of the application program. For example, when the content of an application program is a shooting game in which a fighting aircraft is controlled in space and enemy fighting aircraft are shot down, a casing image that represents space may be displayed, and thereby the external design can be made to be associated with the game content.

A control program for constracting a phone platform which allows the mobile phone 20 to operate in accordance with predetermined steps is memorized in the RAM 202 or the ROM 203. In addition, a basic OS (operating system) program, a program for constructing the application execution environment, and an application program are also memorized in the RAM 202 or the ROM 203. These programs are called, when necessary, in a work area of the CPU 201 or of the RAM 202 and executed.

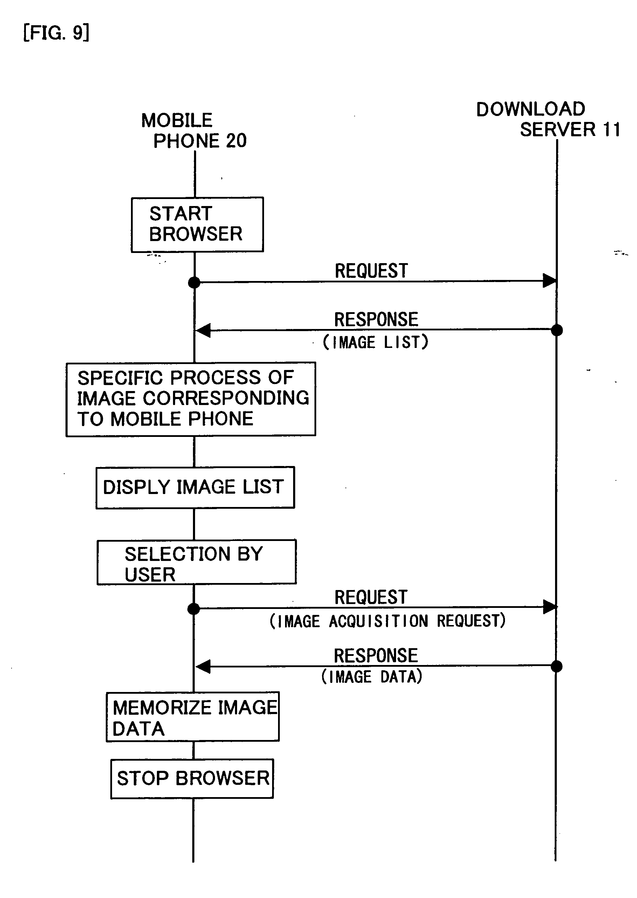

[Operation Example 1-1 of Embodiment 1]
FIG. 9 is a sequence flow diagram of an operation example (hereinafter referred to as the "operation example 1-1") for displaying on a display panel 208 a casings image suitable for the appearance of an external wall portion of a mobile phone 20 of the present Embodiment 1. In the present operation example 1-1, when a casing image is downloaded from a download server 11, first, a user operates the keys of the operating unit 213 to start a browser and inputs a URL of the destination page. In doing so, the main controlling unit 215 that runs the browser sends a request to a download server 11 which is identified by the URL. The download server 11 having received the request sends, as a response, an image list according to the request to a mobile phone 20 that is the source of the request. An external memory device 104 of the download server 11 has memorized therein pieces of image data of a plurality of casing images, and the pieces of image data corresponding to the casing images, respectively, are prepared for different models and model numbers of mobile phones. That is, in the present operation example 1-1, in order that a casing image can be appropriately displayed on the display panel 208 according to the shape and dimensions that vary from model to model, or according to the color or pattern that varies from model number to model number, even for the same casing image, different pieces of image data are prepared for different models and different model numbers.

The image list sent from the download server 11 contains all image IDs corresponding to all pieces of image data memorized in the external memory device 104 of the download server 11. Model IDs for identifying the models and model numbers of mobile phones which correspond to the image IDs, respectively, are associated with the image IDs in the image list. The main controlling unit 215 of the mobile phone 20 having received the image list performs a process of identifying, from the image IDs contained in the image list, image IDs with which the model ID corresponding to the user's mobile phone 20 is associated. Then, the main controlling unit 215 allows only an image list for the identified image IDs to be displayed on the LCD 27. Thus, the image list displayed on the LCD 27 shows only such casing images that can be appropriately displayed on the display panel 208 of the mobile phone 20. Accordingly, it is possible to prevent a situation where the user mistakenly selects image data that is not suitable for his/her mobile phone.

Thereafter, the user operates the keys of the operating unit 213 to select, from the image list displayed on the LCD 27, an icon representing a casing image that the user desires. In doing so, the main controlling unit 215 sends an image ID corresponding to the selected icon, together with a request (image acquisition request), to the download server 11 via the data communication unit 212. The download server 11 having received the request sends, as a response, image data corresponding to the image ID contained in the request, to the mobile phone 20. The main controlling unit 215 of the mobile phone 20 having received the response stores in the RAM 202 the image data contained in the response. In the present operation example 1-1, the data communication unit 212 and the main controlling unit 215 compose the data acquisition means, and the main controlling unit 215 composes the data storage means. The same applies to the following operation examples according to Embodiment 1.

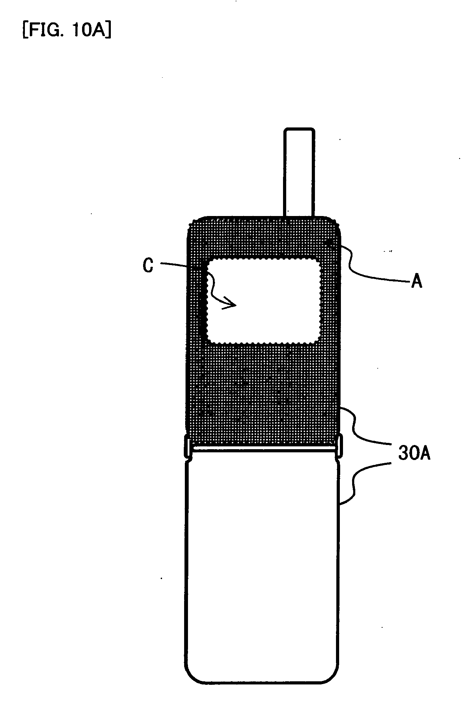

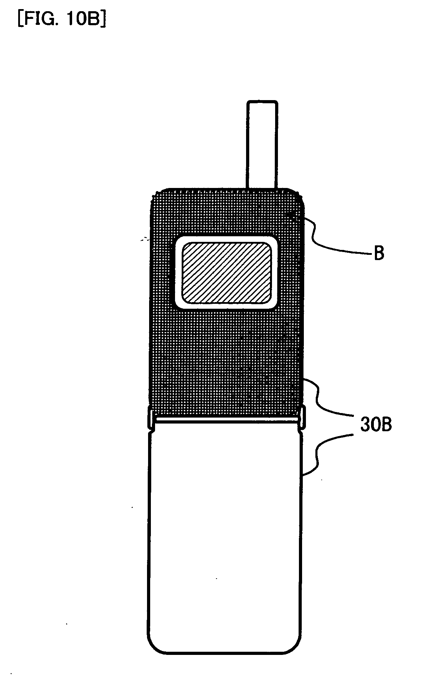

As described above, according to the present operation example 1-1, image data that matches the appearance of the external wall portion of a mobile phone, such as shape and dimensions, a color, or a pattern, can be appropriately downloaded and acquired, and a casing image can be appropriately displayed on a display panel 208 of the mobile phone.
Specifically, for example, the back side of a mobile phone 20 having a display panel 208 shown in FIG. 3B and the back side of a mobile phone 20 having a display panel 208 shown in FIG. 3C have different display areas A and B, respectively. Therefore, for example, when image data suitable for the latter mobile phone 20 is displayed on the display panel 208 of the former mobile phone 20, as shown in FIG. 10A, a casing image is displayed in which a missing portion is present in a portion C corresponding to the backside LCD 29 in FIG. 108. However, in the present operation example 1-1, as described above, since a mobile phone can download only image data that matches the mobile phone, image data of a casing image that does not match the mobile phone, as shown in FIG. 10A, cannot be downloaded.
Further, for example, even if mobile phones are of the same type shown in FIG. 3B, depending on the model number of the mobile phone, there may be two types, one in which the color of a lower half casing portion (other portion) in the drawing where a display panel 208 is not provided is red, and the other in which the color is blue. In this case, for example, even if casing images are made from the same checkered pattern design, it is desirable in view of enhancing the quality of design that the color of the casing image is the same as the color of the casing portion. In such a case too, by using the present operation example 1-1, it is possible to prevent image data of a casing image in which the color of a checkered pattern is different from the color of the casing portion, from being downloaded.

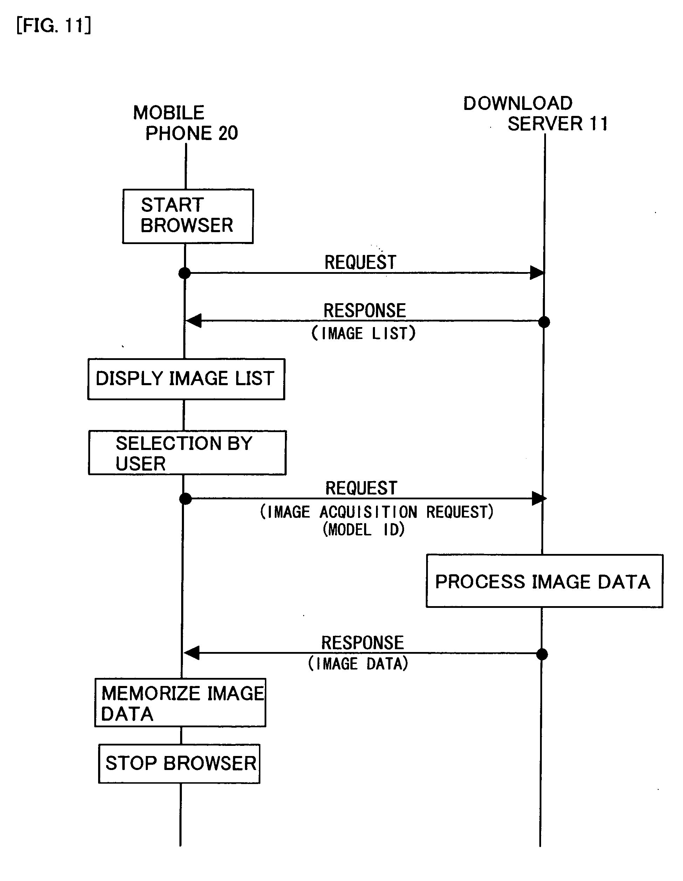

[Operation Example 1-2 of Embodiment 1]
FIG. 11 is a sequence flow diagram of another operation example (hereinafter referred to as the "operation example 1-2") for displaying on a display panel 208 a casing image suitable for the appearance of an external wall portion of a mobile phone 20 of the present Embodiment 1. In the present operation example 1-2 too, first, as in the case of the operation example 1-1, a main controlling unit 215 that runs a browser sends a request to a download server 11 identified by a URL inputted by a user. The download server 11 having received the request sends, as a response, an image list according to the request to a mobile phone 20 that is the source of the request. In the present operation example 1-2, although an external memory device 104 of the download server 11 has memorized therein pieces of image data of a plurality of casing images, a single piece of image data is prepared for each corresponding casing image. That is, unlike in the case of the operation example 1-1, different pieces of image data are not prepared for different models and different model numbers of mobile phones. In addition, although the image list sent from the download server 11 contains all image IDs corresponding to all pieces of image data memorized in the external memory device 104 of the download server 11, model IDs are not associated with the image IDs, unlike in the case of the operation example 1-1.

The main controlling unit 215 of the mobile phone 20 having received the image list allows an image list for the image IDs contained in the image list to be displayed on an LCD 27. The user then operates the keys of an operating unit 213 to select, from the image list displayed on the LCD 27, an icon representing a casing image that the user desires. In doing so, an image ID corresponding to the selected icon is sent together with a request (image acquisition request) to the download server 11. In the present operation example 1-2, when sending the request, a model ID for identifying the model and model number of the mobile phone is sent together with the request. Thus, the download server 11 having received the request can identify the model and model number of the mobile phone 20 that is the source of the request. When receiving the request, a controlling unit, which is composed of a CPU and the like of the download server 11 and serves as the image data processing means, performs processing by processing image data corresponding to the image ID contained in the request, according to the shape and dimensions, color, and pattern of an external wall portion of the mobile phone having a model and a model number identified by the model ID.

The processing will be specifically explained. For example, when image data before processing which is memorized in the external memory device 104 is suitable for a mobile phone shown in FIG. 3B, if the image data is sent as it is as a response to a request from a mobile phone 20 shown in FIG. 3C, due to the difference in display areas A and B, there is a possibility that a casing image based on the image data cannot be displayed or cannot be appropriately displayed on a display panel 208 of the mobile phone 20. Thus, in this case, in the present operation example 1-2, processing is performed on the image data before processing which is suitable for the mobile phone shown in FIG. 3B, by deleting a portion of the image data corresponding to a portion of a backside LCD 29 of the mobile phone shown in FIG. 3C to make the image data suitable for the mobile phone. Then, the image data processed in this way is sent, as a response, to the mobile phone 20 shown in FIG. 3C by a communication device 107 for a mobile phone communication network, which serves as the image data sending means. A main controlling unit 215 of the mobile phone 20 having received the response stores in RAM 202 the image data contained in the response.

As described above, according to the present operation example 1-2, regardless of the model or model number of a mobile phone, by preparing only one piece of image data for each corresponding casing image, a casing image can be appropriately displayed on a display panel 208 of a mobile phone 20 that has made a request for a download. Thus, a creator 2 of a casing image does not need to prepare a plurality of different pieces of image data for the created casing image based on different models and different model numbers. In addition, in the present operation example 1-2, since the processing is performed on the side of the download server 11, there is no need to perform any special process on the side of the mobile phone 20.

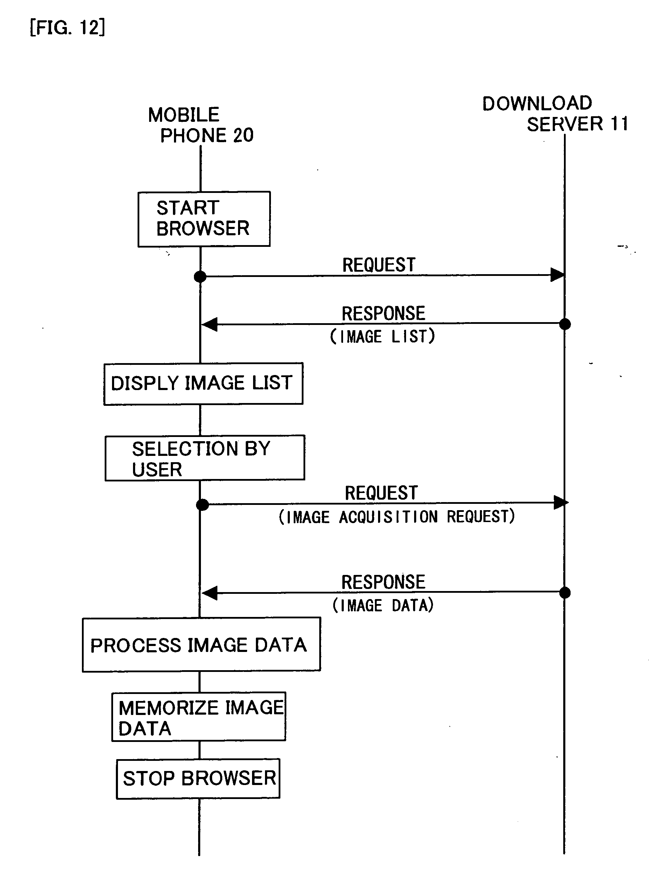

[Operation Example 1-3 of Embodiment 1]
FIG. 12 is a sequence flow diagram of still another operation example (hereinafter referred to as the "operation example 1-3") for displaying on a display panel 208 a casing image suitable for the appearance of an external wall portion of a mobile phone 20 of the present Embodiment 1. In the present operation example 1-3 too, first, as in the case of the operation examples 1-1 and 1-2, a main controlling unit 215 that runs a browser sends a request to a download server 11 identified by a URL inputted by a user. The download server 11 having received the request sends, as a response, an image list according to the request to a mobile phone 20 that is the source of the request. In the present operation example 1-3, although an external memory device 104 of the download server 11 has memorized therein pieces of image data of a plurality of casing images, as in the operation example 1-2, a single piece of image data is prepared for each corresponding casing image. In addition, although the image list sent from the download server 11 contains all image IDs corresponding to all pieces of image data memorized in the external memory device 104 of the download server 11, model IDs are not associated with the image IDs, as in the operation example 1-2.

The main controlling unit 215 of the mobile phone 20 having received the image list allows an image list for the image IDs contained in the image list to be displayed on an LCD 27. The user then operates the keys of an operating unit 213 to select, from the image list displayed on the LCD 27, an icon representing a casing image that the user desires. In doing so, an image ID corresponding to the selected icon is sent together with a request (image acquisition request) to the download server 11. In the present operation example 1-3, unlike the operation example 1-2, when sending the request, a model ID for identifying the model and model number of the mobile phone is not sent together with the request. The download server 11 having received the request sends, as a response, image data corresponding to the image ID contained in the request, as it is, without processing, to the mobile phone 20.

In the present operation example 1-3, the main controlling unit 215 of the mobile phone 20 having received the response functions as the processing means, and performs processing by processing the image data contained in the response, according to the shape and dimensions, color, and pattern of an external wall portion of the mobile phone. The processing will be specifically explained. For example, when image data before processing which is received by a mobile phone 20 shown in FIG. 3C, is suitable for a mobile phone shown in FIG. 3B, if the image data is displayed as it is on a display panel 208, due to the difference in display areas A and B, there is a possibility that a casing image based on the image data cannot be displayed or cannot be appropriately displayed. Thus, in this case, in the present operation example 1-3, the main controlling unit 215 serving as the data processing means performs processing on the received image data before processing, by deleting a portion of the image data corresponding to a portion of a backside LCD 29 of the mobile phone (mobile phone shown in FIG. 3C) to make the image data suitable for the mobile phone. Then, the image data processed in this way is stored in RAM 202.

As described above, according to the present operation example 1-3, regardless of the model or model number of a mobile phone, by preparing only one piece of image data for each corresponding casing image, a casing image can be appropriately displayed on a display panel 208 of a mobile phone 20 that has made a request for a download. Thus, a creator 2 of a casing image does not need to prepare a plurality of different pieces of image data for the created casing image based on different models and different model numbers. In addition, in the present operation example 1-3, since the processing is performed on the side of the mobile phone 20, there is no need to perform processing on the side of the download server 11, unlike the operation example 1-2. When, as in the operation example 1-2, processing is performed on the side of the download server 11, with an increase in the number of models of mobile phones, the number of types of processing increases, resulting in an increase in the processing load on the download server 11; in addition, every time a new model comes out, a new processing program needs to be registered on the download server 11. On the other hand, in the present operation example 1-3, since the processing is performed by each individual mobile phone, the processing load on the download server 11 is distributed among the individual mobile phones; in addition, even if a new model comes out, a new processing program does not need to be registered on the download server 11. Accordingly, the load on a provider of casing images who manages and runs the download server 11 can be reduced.

In the present operation example 1-3, it is described the case in which image data is acquired from an external memory device 104 of a download server 11 as an external memory medium and then the image data is processed; however, image data memorized in advance in RAM 202 as the memory means may be processed.
In present operation example 1-3, it is also described the case in which a main controlling unit 215 executing a predetermined processing program processes non-processed image data according to the shape and dimensions, color, and pattern of an external wall portion of a mobile phone; however, the image data may be processed in accordance with a user operation. That is, in accordance with a user operation, processing such as cutout (trimming) of an image or enlargement or reduction of an image may be performed on image data from a download server 11 that is not processed at all. By such a configuration, the external design of a mobile phone 20 can be made to further reflect a user's preferences.
A processing method different from the one explained in the present operation example 1-3 may be employed. For example, when a casing image composed of a plurality of pieces of the same image repeating horizontally and vertically is displayed on a display panel 208, only image data of the same image is memorized in advance in RAM 202. Then, when the casing image is displayed on the display panel 208, the image data is read, and the image data is processed to obtain a casing image in which the same image based on the image data repeats horizontally and vertically a plurality of times. By employing such a processing method, the capacity of image data memorized in RAM 202 can be reduced as compared with image data of the entire casing image.

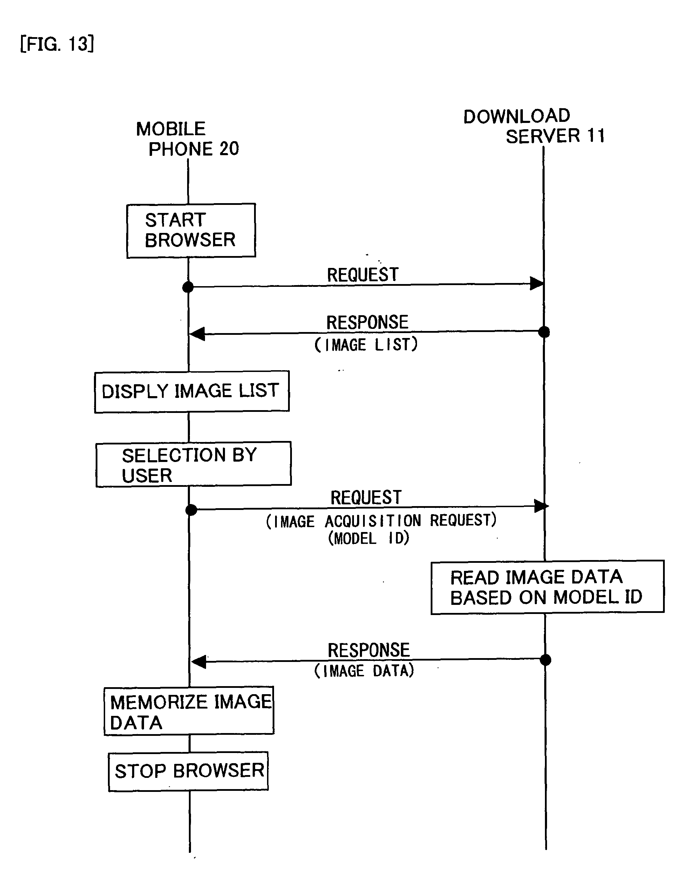

[Operation Example 1-4 of Embodiment 1]
FIG. 13 is a sequence flow diagram of still another operation example (hereinafter referred to as the "operation example 1-4") for displaying on a display panel 208 a casing image suitable for the appearance of an external wall portion of a mobile phone 20 of the present Embodiment 1. In the present operation example 1-4 too, first, as in the case of the operation example 1-1, a main controlling unit 215 that runs a browser sends a request to a download server 11 identified by a URL inputted by a user. The download server 11 having received the request sends, as a response, an image list according to the request to a mobile phone 20 that is the source of the request. In the present operation example 1-4, as in the operation example 1-1, an external memory device 104 of the download server 11 has memorized therein pieces of image data of a plurality of casing images, and the pieces of image data corresponding to the casing images, respectively, are prepared for different models and different model numbers of mobile phones. Model IDs for identifying the models and model numbers of mobile phones which correspond to the pieces of image data, respectively, are associated with the pieces of image data. The image list sent from the download server 11 contains image type IDs that vary depending on the type of images provided by the download server 11. That is, the image type IDs do not vary depending on the image data. Thus, in the present operation example 1-4, since a plurality of pieces of image data is prepared for a casing image of the same type, there is a plurality of pieces of image data having the same image type ID.

The main controlling unit 215 of the mobile phone 20 having received the image list allows an image list for the image type IDs contained in the image list to be displayed on an LCD 27. The user then operates the keys of an operating unit 213 to select, from the image list displayed on the LCD 27, an icon representing a casing image that the user desires. Then, an image type ID corresponding to the selected icon is sent together with a request (image acquisition request) to the download server 11. In the present operation example 1-4, when sending the request, a model ID for identifying the model and model number of the mobile phone is sent together with the request. Accordingly, the download server 11 having received the request can identify the model and model number of the mobile phone 20 that is the source of the request. When receiving the request, a controlling unit, which is composed of a CPU and the like of the download server 11 and serves as the image data reading means, functions as the image data reading means, and reads, from a plurality of pieces of image data corresponding to the image type ID contained in the request, a piece of image data associated with the same model ID as the received model ID. Then, the image data is sent, as a response, to the mobile phone 20 by a communication device 107 for a mobile phone communication network, which serves as the image data sending means. The main controlling unit 215 of the mobile phone 20 having received the response stores in RAM 202 the image data contained in the response.

As described above, according to the present operation example 1-4, regardless of the model or model number of a mobile phone, a casing image can be appropriately displayed on a display panel 208 of a mobile phone 20 that has made a request for a download. In addition, in the present operation example 1-4, since a selection process is performed on the side of the download server 11, there is no need to perform any special process on the side of the mobile phone 20.

In the Embodiment 1 (including each of the operation examples; the same applies to the following), the casing image displayed on a display panel provided in an externally exposed portion of a casing of a mobile phone 20 can be changed to another casing image just by a user performing a predetermined operation on the keys of an operating unit 213. Moreover, the casing image displayed on the display panel maintains its display state even in a non-power-supplied state. Hence, the user can easily change the external design of the mobile phone 20 by performing a key operation on the operating unit 213, without performing a complicated task of changing a replacement part in conventional cases. In addition, according to the operation examples 1-1 to 1-4, even when the appearance of the external wall portion of the mobile phone 20 varies from model to model or from model number to model number, a casing image can be appropriately displayed on the mobile phone 20.
In the above-mentioned Embodiment 1, it is described the case in which image data of a casing image is acquired from a download server 11 via a mobile phone communication network 10; however, other acquisition methods may be used. For example, a method may be used in which image data is read and acquired from an external memory medium that is removable from a mobile phone 20, such as a memory card. Specific examples of the external memory medium include an SD memory card, a CF: Compact Flash (registered trademark) memory card, a SmartMediana memory stick, and an MMC (Multimedia Card). When a mobile phone 20 has image picking-up means such as a compact camera, by imaging with the image picking-up means, image data of a casing image can be acquired.
In the above-mentioned Embodiment 1, it is also described the case in which the casing image is changed based on an image changing condition that there is a key operation on an operating unit 213 by a user or there is an instruction from an application program; however, other image changing conditions can also be adopted. For example, if the image changing condition is that a certain period of time has elapsed, a configuration can be obtained in which the casing image is automatically changed without a user 1 performing any operation.
In the above-mentioned Embodiment 1, it is also described the case of a configuration capable of changing the image displayed on a display panel 208; however, in place of the display panel 208, image display means that cannot change the display state of an image once displayed may be used. In this case, for example, upon purchase of the mobile phone 20, by allowing a user to select an image to be displayed on the image display means of the mobile phone 20, the external design of the mobile phone can be made to match the user's preferences.

[Embodiment 2]
Next, a second embodiment (hereinafter referred to as "Embodiment 2") of the present invention will be explained. For the basic configurations, operations, and the like of a mobile phone as a mobile communication terminal and a download server as a server apparatus according to the present Embodiment 2, the same as those in the case of the foregoing first embodiment can be adopted, and thus, an explanation of the common portions will be omitted. Portions of the configuration and operation different from those according to the foregoing first embodiment will be explained below.

When receiving a download request which is a program acquisition request from a mobile phone 20, a download server 11 according to the present Embodiment 2 sends an application program which is a specific program according to the request, to the mobile phone 20. When receiving a download request which is an image acquisition request from the mobile phone 20, the download server 11 also functions as an image providing server that sends image data according to the request to the mobile phone 20. The image data is LCD image data or casing image data. The LCD image data is image data of an image to be displayed on a liquid crystal display (LCD) 27 or a backside LCD 29 of the mobile phone 20. The casing image data is image data of a casing image to be displayed on a casing image display panel of the mobile phone 20.

An application program, LCD image data, casing image data, and the like to be provided from the download server 11 are provided from a creator 2. Specifically, for example, an application program, LCD image data, casing image data, and the like are uploaded via a leased line or a public line to the download server 11 from a personal computer or the like on the side of the creator 2, and thereby the application program, LCD image data, casing image data, and the like are provided. Application program, LCD image data, casing image data, and the like may be provided such that a recording medium, such as an optical disk or a magnetic disk, having recorded thereon created application program, LCD image data, casing image data, and the like is sent from the creator 2 to a communication common carrier who manages and runs the download server 11 and then the data on the recording medium is read by the download server 11. The application program, LCD image data, casing image data, and the like provided in this way are registered on the download server 11 in a state such that the mobile phone 20 can download via the mobile phone communication network 10.

In an external memory device 104 of the download server 11, LCD image data and application programs to be provided to the mobile phone 20 are memorized. In the external memory device 104, casing image data which is image data of a casing image to be displayed on a casing image display panel of the mobile phone 20 is memorized in a state such that the casing image data is associated with the LCD image data and application program. The download server 11 has a function of sending, in response to a download request from the mobile phone 20, LCD image data, an application program, and casing image data associated with the LCD image data and the application program, which are memorized in the external memory device 104, to the mobile phone 20 via the mobile phone communication network 10 in cooperation with a CPU 101, RAM 102, a communication device 107 for a mobile phone communication network, and the like.

The mobile phone 20 of the present Embodiment 2 includes a casing image display panel 208, as in the Embodiment 1. For the display panel 208, for example, electronic paper, such as those shown in the foregoing FIGS 5, 6A, and 6B, that are capable of changing a displayed image and of maintaining the display state of a displayed image even in a non-power-supplied state, can be used.

A main portion of the mobile phone 20 of the present Embodiment 2 includes, as in the foregoing FIG. 7, a phone communication unit 211 and a data communication unit 212 as the radio communication means; an operating unit 213 as the operation means; an application program execution management unit 214 as the application program execution means; a main controlling unit 215; an output unit 216; a casing image displaying unit 217; and the like. The mobile phone 20 has the same software structure as in the foregoing FIG. 8.

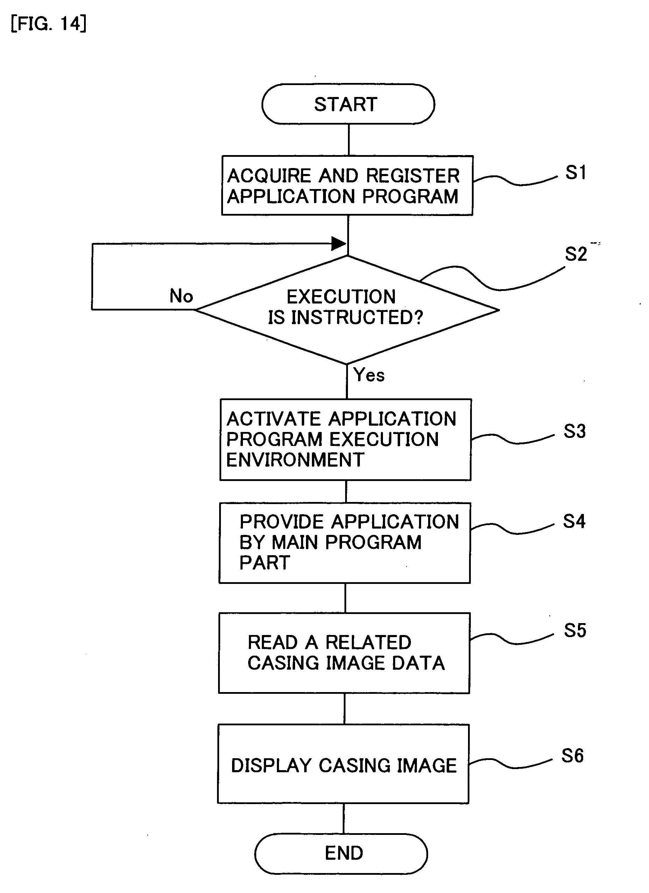

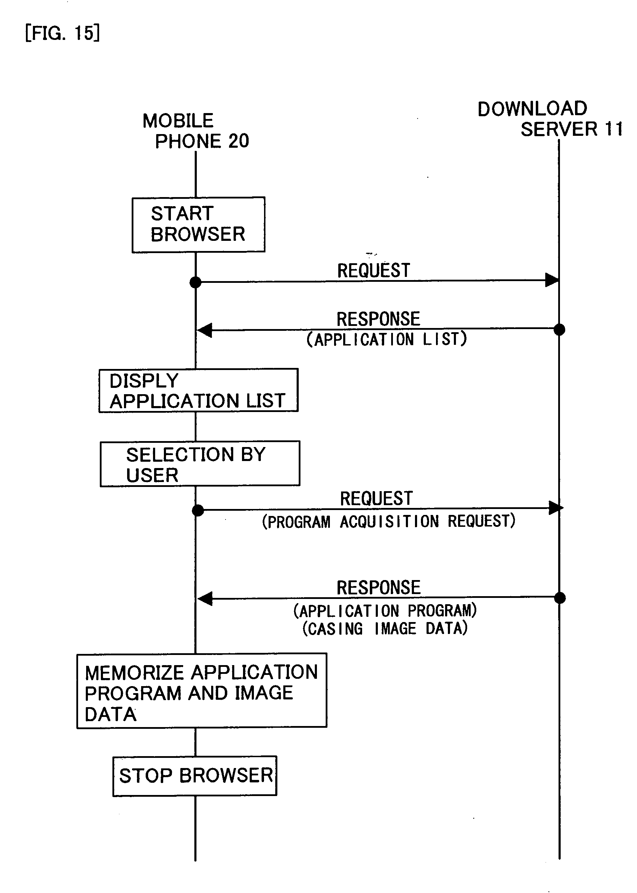

[Operation Example 2-1 of Embodiment 2]
FIG. 14 is a flowchart showing a flow of control in an operation example (hereinafter referred to as the "operation example 2-1 ") for displaying, when an application program is executed by an application program execution management unit 214 of a mobile phone 20 according to the present Embodiment 2, a casing image related to the program on a display panel 208.
First, a user 1 downloads and acquires an application program as a specific program from the foregoing download server 11, and registers the application program (S1). Specifically, as shown in FIG. 15, when an application program is downloaded from a download server 11, first, the user operates the keys of an operating unit 213 to start a browser and inputs a URL of the destination page. In doing so, a main controlling unit 215 that runs the browser sends a request to a download server 11 which is identified by the URL. The download server 11 having received the request sends, as a response, an application list according to the request to a mobile phone 20 that is the source of the request. Thereafter, the user operates the keys of the operating unit 213 to select, from the application list displayed on an LCD 27, an application program that the user desires. In doing so, the main controlling unit 215 sends the selection result together with a request (program acquisition request), to the download server 11 via a data communication unit 212. The download server 11 having received the request sends, as a response, an application program according to the request to the mobile phone 20.

In the present operation example 2-1, an application program contains, in addition to the application's original main program portion, a display control program portion for allowing a casing image to be displayed on the display panel 208 via the main controlling unit 215. When the application program is downloaded, as shown in FIG. 15, casing image data that is used by the control display program portion contained in the application program is also contained in a response, and the casing image data is downloaded together with the application program. The main controlling unit 215 of the mobile phone 20 having received the response stores in RAM 202 the application program and casing image data contained in the response. The casing image data is stored in a state such that the casing image data is associated with the application program. In the present operation example 2-1, the data communication unit 212 and the main controlling unit 215 compose the data acquisition means, and the main controlling unit 215 composes the data storage means. The same applies to the following operation examples according to the present Embodiment 2.

To execute the application program downloaded in this way, the user 1 operates the keys of the operating unit 213 to select an application program to be executed, and performs an execution instruction operation (S2). In doing so, an application program execution instruction is inputted to the phone platform shown in the foregoing FIG. 8, i.e., the main controlling unit 215 shown in FIG. 7. Accordingly, the main controlling unit 215 reads and starts the downloaded application program (S3). In the present operation example 2-1, when the application program starts up, the application program operates in the application execution environment shown in FIG. 8, i.e., the application program execution management unit 214 shown in FIG. 7. As a result, an application in accordance with the content of the main program portion of the application program is provided to the user 1 of the mobile phone 20 (S4).

Furthermore, in the present operation example 2-1, when the application program starts up, a display control instruction is sent to the application program execution management unit 214 in accordance with the content of the display control program portion of the application program. Accordingly, the application program execution management unit 214 sends a display control instruction to the main controlling unit 215 of the phone platform. The main controlling unit 215 having received the display control instruction reads from the RAM 202 casing image data according to the display control instruction (S5). The casing image data is one that is downloaded at the same time when the application program is downloaded, and memorized in the RAM 202. Thereafter, the main controlling unit 215 outputs, as in the above, a display control instruction which is based on the casing image data to a casing image displaying unit 217. Accordingly, the casing image displayed on the display panel 208 is changed to another casing image related to the content of the main program portion of the application program (S6).

As described above, according to the present operation example 2-1, during the execution of an application program, the external design of a mobile phone can be made to be related to the content of a main program portion of the application program. For example, when the content of the main program is a shooting game in which a fighting aircraft is controlled in space and enemy fighting aircraft are shot down, a casing image that represents space may be displayed, and thereby the external design can be made to be associated with the game content.

(Operation Example 2-2 of Embodiment 2)

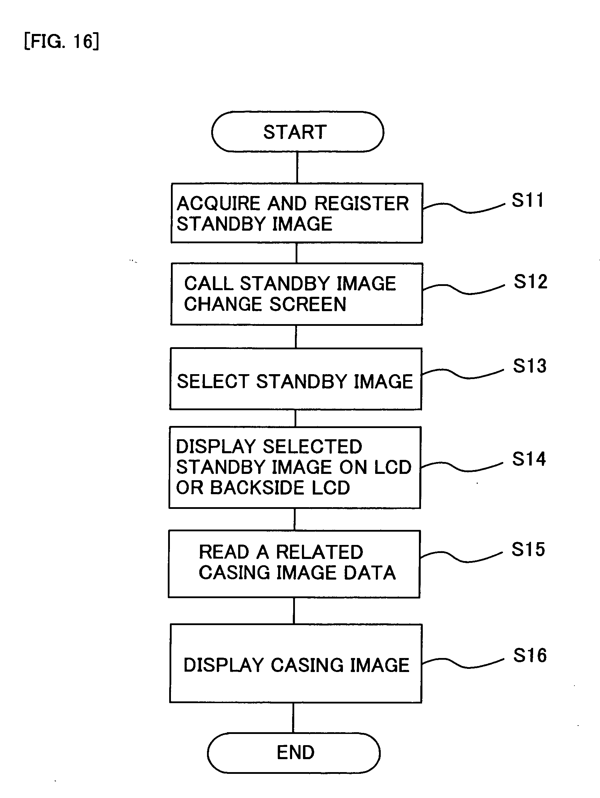

FIG. 16 is a flowchart showing a flow of control in an operation example (hereinafter referred to as the "operation example 2-2") for displaying, when a standby image or a wallpaper image is displayed on an LCD 27 or a backside LCD 29 of a mobile phone 20 of the present Embodiment 2, a casing image related to the image on a display panel 208. In the following operation example 2-2, a standby image will be described; however, any image can be used likewise as long as the image can be displayed on the LCD 27 or the backside LCD 29.

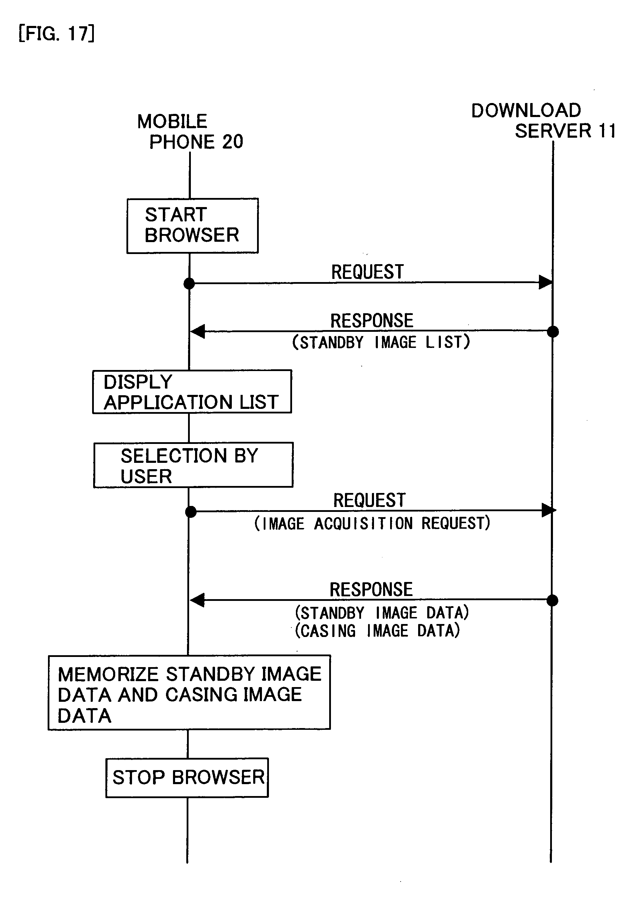

In the present operation example 2-2, first, as in the case of downloading the application program, a user 1 downloads and acquires standby image data of a standby image from the download server 11, and registers the standby image data (S11). Specifically, as shown in FIG. 17, when a request is sent to the download server 11 from a main controlling unit 215 that runs a browser, the download server 11 sends, as a response, a standby image list according to the request. Thereafter, the user operates the keys of an operating unit 213 to select, from the standby image list displayed on an LCD 27, a standby image that the user desires. In doing so, the main controlling unit 215 sends the selection result together with a request (image acquisition request), to the download server 11 via a data communication unit 212. The download server 11 having received the request sends, as a response, standby image data according to the request to a mobile phone 20. In the present operation example 2-2, when the standby image data is downloaded, as shown in FIG. 17, casing image data of a casing image related to the standby image is also contained in a response, and the casing image data is downloaded together with the standby image data. The main controlling unit 215 of the mobile phone 20 having received the response stores in RAM 202 the standby image data and casing image data contained in the response. The casing image data is stored in a state such that the casing image data is associated with the standby image data.

To display on the LCD 27 or the backside LCD 29 a standby image which is based on the standby image data downloaded in this way, the user 1 operates the keys of the operating unit 213 to call a standby image change screen (S12), and selects the downloaded standby image (S13). In doing so, a display instruction for the selected standby image is inputted to the phone platform shown in the foregoing FIG. 8, i.e., the main controlling unit 215 shown in FIG. 7. Accordingly, the main controlling unit 215 reads from the RAM 202 standby image data according to the display instruction, and controls to display a standby image which is based on the standby image data on the LCD 27 or the backside LCD 29 via an output unit 216 (S 14).

Furthermore, in the present operation example 2-2, the casing image data associated with the standby image data is also read from the RAM 202 (S 15). The casing image data is one that is downloaded at the same time when the standby image data is downloaded, and memorized in the RAM 202. Thereafter, the main controlling unit 215 outputs, as in the above, a display control instruction which is based on the casing image data to the casing image displaying unit 217. Accordingly, the casing image being displayed on the display panel 208 is changed to another casing image related to the content of the standby image (S16).

As described above, according to the present operation example 2-2, when a standby image selected by the user 1 is displayed on the LCD 27 or the backside LCD 29, the external design of the mobile phone can be made to be related to the content of the standby image. For example, when the standby image is the logo of a professional baseball team, a casing image similar to the uniform of the team may be displayed, and thereby the external design can be made to be associated with the standby image.

In the above-mentioned Embodiment 2, the casing image displayed on a display panel provided in an externally exposed portion of a casing of a mobile phone 20 can be changed to another casing image just by a user performing a predetermined operation on the keys of an operating unit 213. Moreover, the casing image displayed on the display panel maintains its display state even in a non-power-supplied state. Hence, the user can easily change the external design of the mobile phone 20 by performing a key operation on the operating unit 213, without performing a complicated task of changing a replacement part in conventional cases.
In the above-mentioned Embodiment 2, it is described the case, as an example, in which an application program, standby image data, and casing image data are acquired from a download server 11 via a mobile phone communication network 10; however, other acquisition methods may be used. For example, a method may be used in which image data is read and acquired from an external memory medium that is removable from a mobile phone 20, such as a memory card. Specific examples of the external memory medium include an SD memory card, a CF: Compact Flash (registered trademark) memory card, a SmartMedia, a memory stick, and an MMC (Multimedia Card).
In the above-mentioned Embodiment 2, it is also described the case in which a casing image is acquired together with an application program or standby image data that is related to the casing image; however, they may be acquired separately. For example, when a mobile phone 20 has image picking-up means such as a compact camera, by imaging with the image picking-up means, image data of a casing image can be acquired. Separately acquired application program or standby image data and a casing image are stored, after acquisition, in RAM 202 so as to be associated with each other.

[Embodiment 3]
Next, a third embodiment (hereinafter referred to as "Embodiment 3") of the present invention will be explained. For the basic configurations, operations, and the like of a mobile phone as a mobile communication terminal, and a download server as a server apparatus, according to the present Embodiment 3, the same as those in the case of the foregoing first embodiment can be adopted, and thus, an explanation of the common portions will be omitted. Portions of the configuration and operation different from those according to the foregoing first embodiment will be explained below.

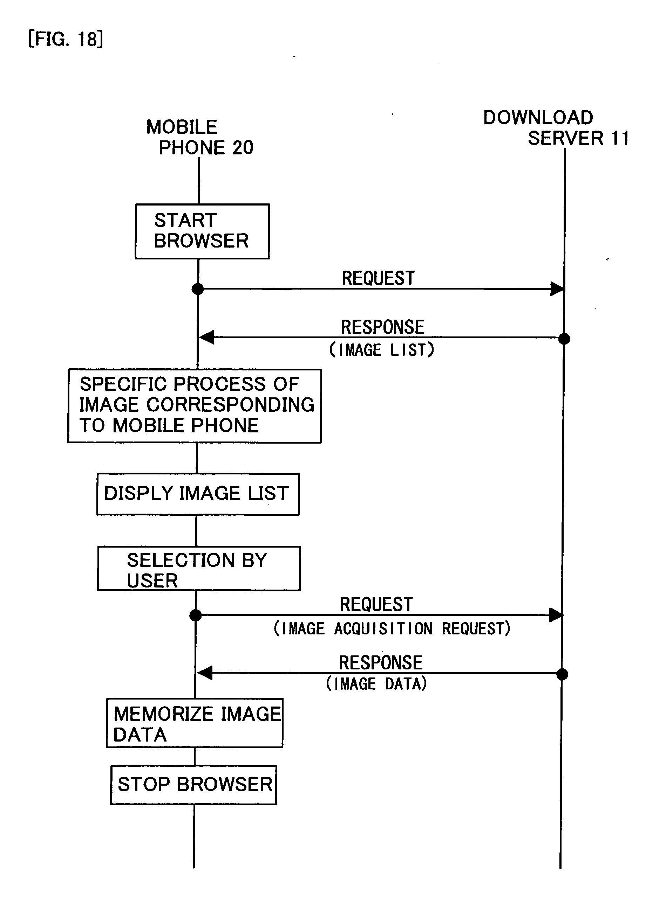

[Operation Example 3-1 of Embodiment 3]
FIG. 18 is a sequence flow diagram of an operation example (hereinafter referred to as the "operation example 3-1") for displaying a casing image suitable for the color or the like of a lower casing 30b of a mobile phone 20 according to the present Embodiment 3 on a display panel 208 of an upper casing 30a. In the present operation example 3-1, when a casing image is downloaded from a download server 11, first, a user operates the keys of an operating unit 213 to start a browser and inputs a URL of the destination page. In doing so, a main controlling unit 215 that runs the browser sends a request to a download server 11 which is identified by the URL. The download server 11 having received the request sends, as a response, an image list according to the request to a mobile phone 20 that is the source of the request. An external memory device 104 of the download server 11 has memorized therein pieces of image data of a plurality of casing images, and the pieces of image data corresponding to the casing image, respectively, are individually prepared according to different colors or the like of the lower casing 30a of the mobile phone. That is, in the present operation example 3-1, in order that a casing image in harmony with the color or the like of the lower casing 30a can be appropriately displayed on the display panel 208, even for a casing image based on the same image design, different pieces of image data are prepared.

The image list sent from the download server 11 contains all image IDs corresponding to all pieces of image data memorized in the external memory device 104 of the download server 11. Model IDs (appearance identification information) for identifying the models and model numbers of mobile phones and the colors or the like of the lower casing 30a which correspond to the image IDs, respectively, are associated with the image IDs in the image list. The main controlling unit 215 of the mobile phone 20 having received the image list performs a process of selecting, from the image IDs contained in the image list, image IDs with which the model ID corresponding to the mobile phone 20 is associated. Specifically, the main controlling unit 215 selects image IDs associated with a model ID corresponding with a model ID memorized in ROM 203 which serves as the appearance identification information memory means. Then, the main controlling unit 215 allows only an image list for the selected image IDs to be displayed on the LCD 27. Thus, the image list displayed on the LCD 27 shows only such casing images that are suitable for the color or the like of the lower casing 30b of the mobile phone. Accordingly, it is possible to prevent a situation where the user mistakenly selects image data that is not suitable for the color or the like of the lower casing 30b of his/her mobile phone.

Thereafter, the user operates the keys of the operating unit 213 to select, from the image list displayed on the LCD 27, an icon representing a casing image that the user desires. In doing so, the main controlling unit 215 sends an image ID corresponding to the selected icon, together with a request (image acquisition request), to the download server 11 via a data communication unit 212. The download server 11 having received the request sends, as a response, image data corresponding to the image ID contained in the request, to the mobile phone 20. The main controlling unit 215 of the mobile phone 20 having received the response stores in the RAM 202 the image data contained in the response. In the present operation example 3-1, the data communication unit 212 and the main controlling unit 215 compose the data acquisition means, and the main controlling unit 215 composes the data storage means. The same applies to the following operation

### examples.

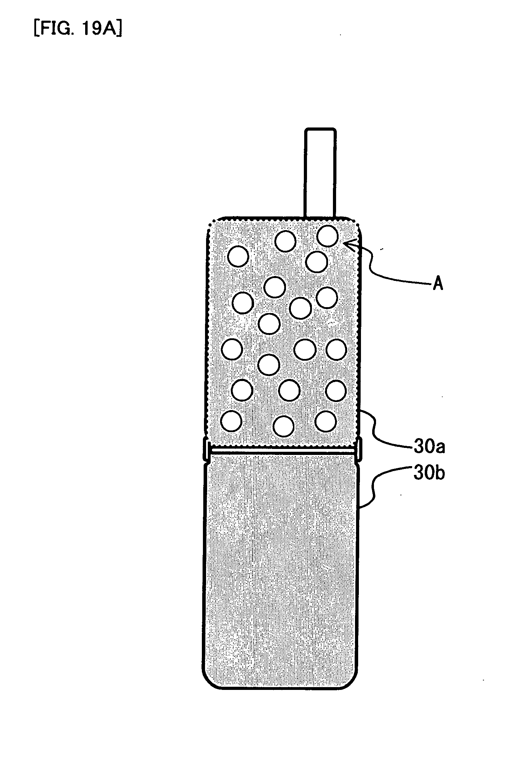

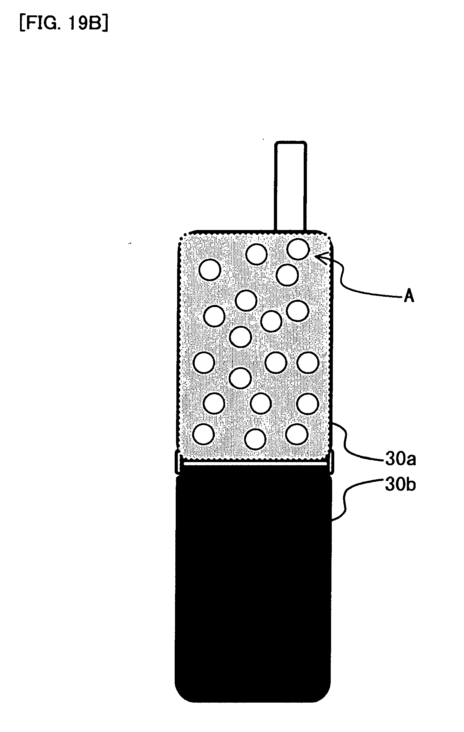

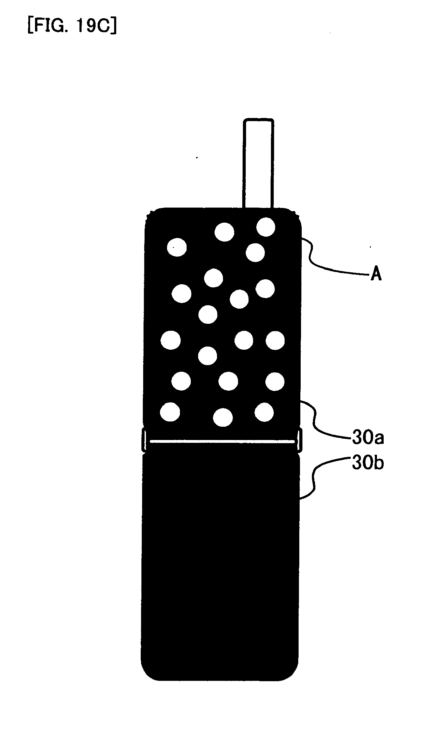

As described above, according to the present operation example 3-1, image data that matches the color or the like of a lower casing 30b of a mobile phone can be appropriately downloaded and acquired, and a casing image in harmony with the color or the like of the lower casing 30b can be displayed on a display panel 208 of the mobile phone.
Specifically, for example, when the lower casing 30b where the display panel 208 is not provided has a light color, as shown in FIG. 19A, a casing image having, for example, a polka-dot pattern with a background of the same light color, as shown in the drawing, is displayed on the display panel 208 of the mobile phone. In this case, harmony between the color of the lower casing 30b and the casing image displayed on the display panel 208 is achieved, resulting in an external design having, as a whole, a sense of unity. On the other hand, when the lower casing 30b has a deep color as shown in FIG. 19B, if a casing image with a background of the same light color as that of FIG. 19A, for example, is displayed on the display panel 208 of the mobile phone, there is no sense of unity as a whole and the quality of design for the external appearance of the whole mobile phone is degraded. Hence, when the lower casing 30b has a deep color such as that shown in FIG. 19B, it is desirable to display a casing image with a background of the same deep color to enhance a sense of unity as a whole, as shown in FIG. 19C. According to the present operation example 3-1, for a casing image having the same polka-dot pattern, image data in which the background has a light color such as that shown in FIG. 19A and image data in which the background has a deep color such as that shown in FIG. 19C are memorized in the external memory device 104 of the download server 11, and image data that matches the color of the lower casing 30b of the mobile phone can be appropriately downloaded and acquired. Accordingly, as shown in FIG. 19A and FIG. 19C, a casing image in harmony with the color of the lower casing 30b can be displayed on the display panel 208 of the mobile phone, and thus, the quality of design for the external appearance of the whole mobile phone can be enhanced. Conversely, according to the present operation example 3-1, it is possible to prevent image data of a casing image which is not in harmony with the color of the lower casing 30b as shown in FIG. 19B, from being downloaded, and a reduction in the quality of design for the external appearance of the whole mobile phone can be prevented.

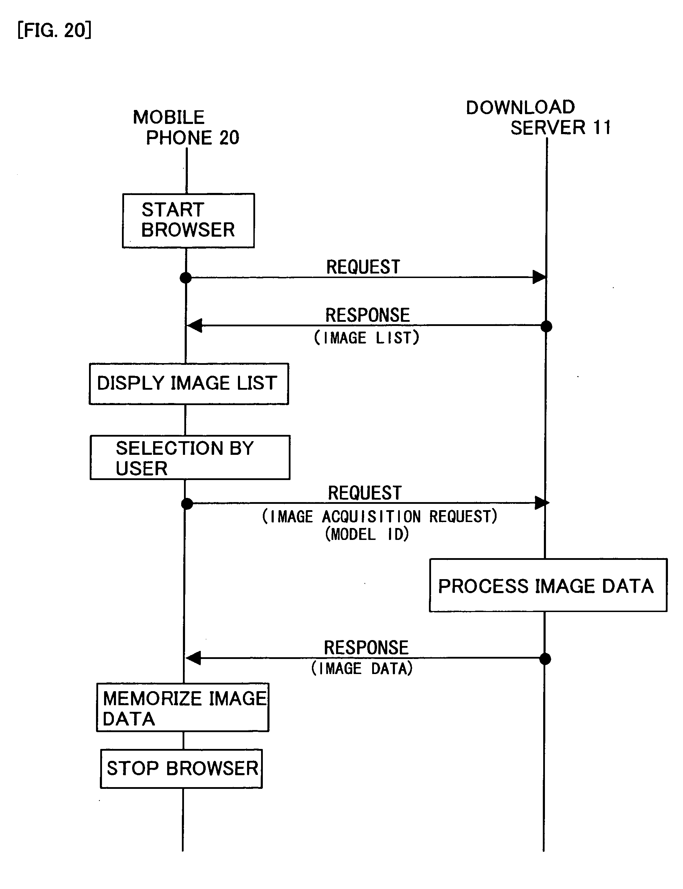

[Operation Example 3-2 of Embodiment 3]
FIG. 20 is a sequence flow diagram of another operation example (hereinafter referred to as the "operation example 3-2") for displaying a casing image suitable for the color or the like of a lower casing 30b of a mobile phone 20 according to the present Embodiment 3 on a display panel 208 of an upper casing 30a. In the present operation example.3-2 too, first, as in the foregoing operation example 3-1, a main controlling unit 215 that runs a browser sends a request to a download server 11 identified by a URL inputted by a user. The download server 11 having received the request sends, as a response, an image list according to the request to a mobile phone 20 that is the source of the request. In the present operation example 3-2, although an external memory device 104 of the download server 11 has memorized therein pieces of image data of a plurality of casing images, a single piece of image data is prepared for each corresponding casing image. That is, unlike in the case of the operation example 3-1, the pieces of image data are not individually prepared according to different colors or the like of the lower casing 30b of the mobile phone. In addition, although the image list sent from the download server 11 contains all image IDs corresponding to all pieces of image data memorized in the external memory device 104 of the download server 11, model IDs are not associated with the image IDs, unlike in the case of the operation example 3-1.

The main controlling unit 215 of the mobile phone 20 having received the image list allows an image list for the image IDs contained in the image list to be displayed on an LCD 27. The user then operates the keys of an operating unit 213 to select, from the image list displayed on the LCD 27, an icon representing a casing image that the user desires. In doing so, an image ID corresponding to the selected icon is sent together with a request (image acquisition request) to the download server 11. In the present operation example 3-2, when sending the request, as in the operation example 3-1, a model ID (appearance identification information) for identifying the model and model number of the mobile phone and the color or the like of the lower casing 30a is sent together with the request. Thus, the download server 11 having received the request can identify the color or the like of the lower casing 30a of the mobile phone 20 that is the source of the request. When receiving the request, a controlling unit, which is composed of a CPU and the like of the download server 11 and serves as the image data processing means, performs processing by processing image data corresponding to the image ID contained in the request, according to the color or the like of the lower casing 30a identified by the model ID.

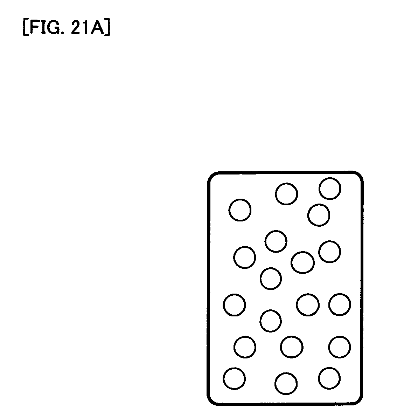

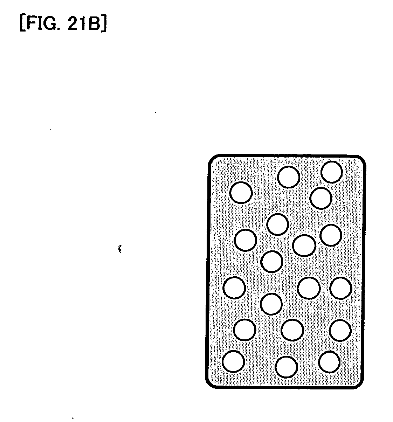

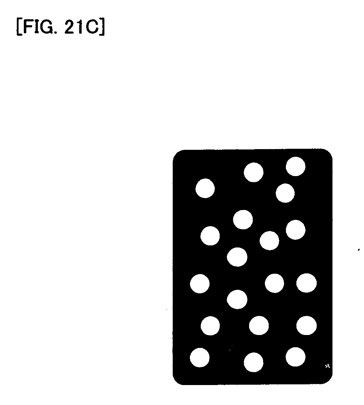

This processing will be specifically explained. For example, it is assumed that image data before processing which is memorized in the external memory device 104 has a polka-dot pattern with a background color of white, as shown in FIG. 21 A. In this case, if the image data is sent as it is as a response to a request from the mobile phone 20 shown in FIG. 19A, the image data does not achieve harmony with the color (light color) of the lower casing 30b of the mobile phone 20, degrading the quality of design. Thus, in this case, in the present operation example 3-2, a processing is performed in which a light color of the lower casing 30a of the mobile phone that is the source of the request is identified based on a model ID contained in the request, and the color of a background portion in the image data shown in FIG. 21 A is changed to a light color in harmony with the identified light color, as shown in FIG. 21B. On the other hand, regarding a response to a request from the mobile phone 20 shown in FIG. 19A, a deep color of the lower casing 30a of the mobile phone that is the source of the request is identified based on a model ID contained in the request, and a processing is performed in which the color of a background portion in the image data shown in FIG. 21A is changed to a deep color in harmony with the identified deep color, as shown in FIG. 21C. The image data processed in this way is sent, as a response, to the mobile phone 20 by a communication device 107 for a mobile phone communication network, which serves as the image data sending means. The main controlling unit 215 of the mobile phone 20 having received the response stores in RAM 202 the image data contained in the response. Accordingly, as shown in FIG. 19A and FIG. 19C, a casing image in harmony with the color of the lower casing 30b can be displayed on the display panel 208 of the mobile phone, and the quality of design, as a whole, of the external design of the mobile phone can be enhanced.

As described above, according to the present operation example 3-2, regardless of the difference in the color or the like of a lower casing 30b of a mobile phone, by preparing only one piece of image data for each corresponding casing image, it is possible to display on a display panel 208 of a mobile phone 20 that has made a request for a download a casing image in harmony with the color or the like of the lower casing 30b of the mobile phone 20. Thus, a creator 2 of a casing image does not need to prepare a plurality of different pieces of image data for the created casing image based on different models and different model numbers. In addition, in the present operation example 3-2, since the processing is performed on the side of the download server 11, there is no need to perform any special process on the side of the mobile phone 20.

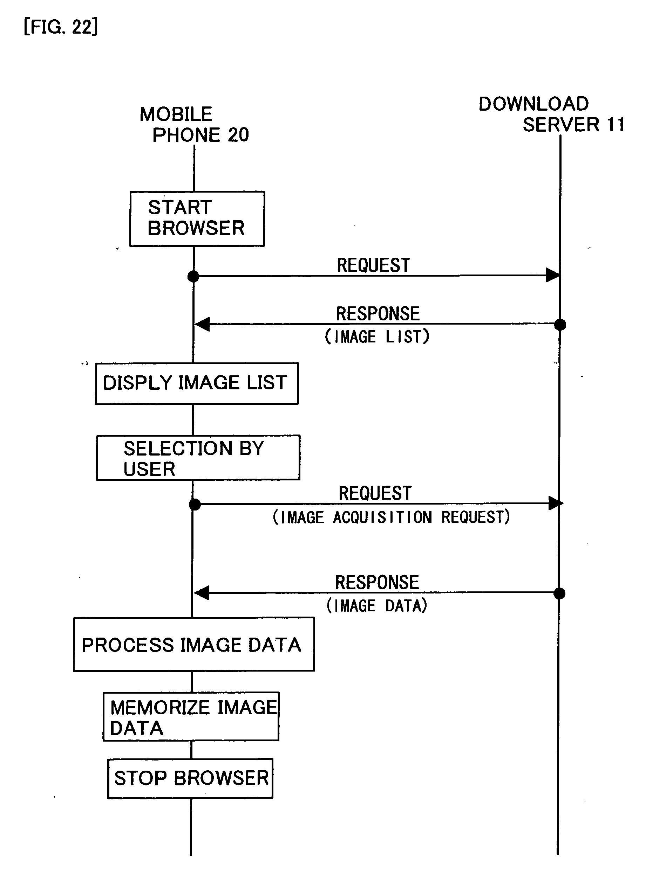

[Operation Example 3-3 of Embodiment 3]
FIG. 22 is a sequence flow diagram of still another operation example (hereinafter referred to as the "operation example 3-3") for displaying a casing image suitable for the color or the like of a lower casing 30b of a mobile phone 20 according to the present Embodiment 3 on a display panel 208 of an upper casing 30a. In the present operation example 3-3 too, first, as in the case of the operation examples 3-1 and 3-2, a main controlling unit 215 that runs a browser sends a request to a download server 11 identified by a URL inputted by a user. The download server 11 having received the request sends, as a response, an image list according to the request to a mobile phone 20 that is the source of the request. In the present operation example 3-3, although an external memory device 104 of the download server 11 has memorized therein pieces of image data of a plurality of casing images, as in the operation example 3-2, a single piece of image data is prepared for each corresponding casing image. In addition, although the image list sent from the download server 11 contains all image IDs corresponding to all pieces of image data memorized in the external memory device 104 of the download server 11, model IDs are not associated with the image IDs, as in the operation example 3-2.

The main controlling unit 215 of the mobile phone 20 having received the image list allows an image list for the image IDs contained in the image list to be displayed on an LCD 27. The user then operates the keys of an operating unit 213 to select, from the image list displayed on the LCD 27, an icon representing a casing image that the user desires. In doing so, an image ID corresponding to the selected icon is sent together with a request (image acquisition request) to the download server 11. In the present operation example 3-3, unlike the operation example 3-2, when sending the request, a model ID is not sent together with the request. The download server 11 having received the request sends, as a response, image data corresponding to the image ID contained in the request, as it is, without processing, to the mobile phone 20. That is, the image data before processing which is shown in FIG. 21A is sent as it is to the mobile phone 20 as a response.

In the present operation example 3-3, the main controlling unit 215 of the mobile phone 20 having received the response functions as the processing means, and performs processing by processing the image data contained in the response, according to the color or the like of the lower casing 30b of the mobile phone. The processing is the same as that performed by the download server 11 in the operation example 3-2. Namely, when the mobile phone is the mobile phone 20 shown in FIG. 19A, processing is performed by changing the color of a background portion in the image data, shown in FIG. 21 A, which is received as a response, to a light color in harmony with a light color of the lower casing 30a of the mobile phone, as shown in FIG. 21B. On the other hand, if the mobile phone is the mobile phone 20 shown in FIG. 19C, processing is performed by changing the color of a background portion in the image data, shown in FIG. 21A, which is received as a response, to a deep color in harmony with a deep color of the lower casing 30b of the mobile phone, as shown in FIG. 21C. Then, the image data processed in this way is stored in RAM 202. Accordingly, as shown in FIG. 19A and FIG. 19C, a casing image in harmony with the color of the lower casing 30b can be displayed on the display panel 208 of each mobile phone, and the quality of design, as a whole, of the external design of the mobile phone can be enhanced.

As described above, according to the present operation example 3-3, regardless of the difference in the color or the like of a lower casing 30b of a mobile phone, by preparing only one piece of image data for each corresponding casing image, it is possible to display on a display panel 208 of a mobile phone 20 that has made a request for a download a casing image in harmony with the color or the like of the lower casing 30b of the mobile phone 20. Thus, a creator 2 of a casing image does not need to prepare a plurality of different pieces of image data for the created casing image based on different models and different model numbers. In addition, in the present operation example 3-3, since the processing is performed on the side of the mobile phone 20, there is no need to perform processing on the side of the download server 11, unlike the operation example 3-2. When, as in the operation example 3-2, processing is performed on the side of the download server 11, with an increase in the number of models of mobile phones, the number of types of processing increases, resulting in an increase in the processing load on the download server 11; in addition, every time a new model comes out, a new processing program needs to be registered on the download server 11. On the other hand, in the present operation example 3-3, since the processing is performed by each individual mobile phone, the processing load on the download server 11 is distributed among the individual mobile phones; in addition, even if a new model comes out, a new processing program does not need to be registered on the download server 11. Accordingly, the load on a provider of casing images who manages and runs the download server 11 can be reduced.

In the present operation example 3-3, it is described the case in which image data is acquired from an external memory device 104 of a download server 11 as an external memory medium and then the image data is processed; however, image data memorized in advance in RAM 202 as the memory means may be processed.
In the present operation example 3-3, it is described the case in which a main controlling unit 215 executing a predetermined processing program processes non-processed image data according to the color or the like of a lower casing 30b of a mobile phone; however, image data may be processed in accordance with a user operation. That is, non-processed image data from a download server 11 may be processed to be image data that the user desires, among a plurality of pieces of image data in harmony with the color or the like of the lower casing 30b of the mobile phone. By such a configuration, the external design of a mobile phone 20 can be made to reflect a user's preferences.

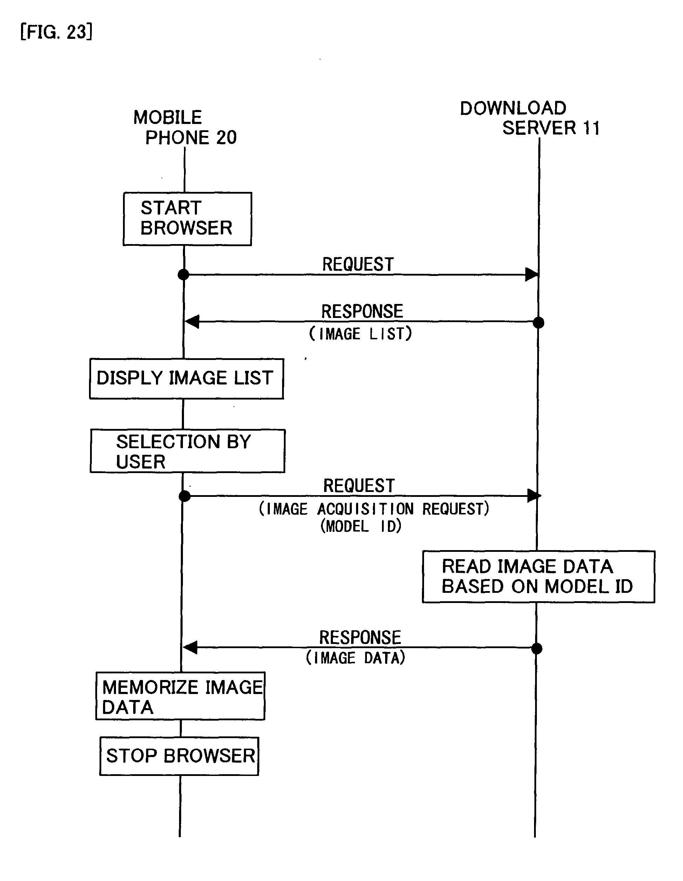

[Operation Example 3-4 of Embodiment 3]
FIG. 23 is a sequence flow diagram of still another operation example (hereinafter referred to as the "operation example 3-4") for displaying a casing image suitable for the color or the like of a lower casing 30b of a mobile phone 20 according to the present Embodiment 3 on a display panel 208 of an upper casing 30a. In the present operation example 3-4 too, first, as in the case of the operation example 3-1, a main controlling unit 215 that runs a browser sends a request to a download server 11 identified by a URL inputted by a user. The download server 11 having received the request sends, as a response, an image list according to the request to a mobile phone 20 that is the source of the request. In the present operation example 3-4, an external memory device 104 of the download server 11 has memorized therein pieces of image data of a plurality of casing images, as in the operation example 3-1, and the pieces of image data corresponding to the casing image, respectively, are individually prepared according to the color or the like of the lower casing 30b of the mobile phone. Model IDs for identifying the models and model numbers of mobile phones and the colors or the like of the lower casing 30a which correspond to the pieces of image data, respectively, are associated with the pieces of image data. The image list sent from the download server 11 contains image type IDs that vary depending on the type of images provided by the download server 11. That is, the image type IDs do not vary depending on the image data. Thus, in the present operation example 3-4, since a plurality of pieces of image data are prepared for a casing image which is based on the same image design, there are a plurality of pieces of image data having the same image type ID.

The main controlling unit 215 of the mobile phone 20 having received the image list allows an image list for the image type IDs contained in the image list to be displayed on an LCD 27. The user then operates the keys of an operating unit 213 to select, from the image list displayed on the LCD 27, an icon representing a casing image that the user desires. In doing so, an image type ID corresponding to the selected icon is sent together with a request (image acquisition request) to the download server 11. In the present operation example 3-4, when sending the request, the model ID is sent together with the request. Accordingly, the download server 11 having received the request can identify the color or the like of the lower casing 30a of the mobile phone 20 that is the source of the request. When receiving the request, a controlling unit, which is composed of a CPU and the like of the download server 11 and serves as the image data reading means, functions as the image data reading means, and reads, from a plurality of pieces of image data corresponding to the image type ID contained in the request, a piece of image data associated with the same model ID as the received model ID. Then, the image data is sent, as a response, to the mobile phone 20 by a communication device 107 for a mobile phone communication network, which serves as the image data sending means. The main controlling unit 215 of the mobile phone 20 having received the response stores in RAM 202 the image data contained in the response.

As described above, according to the present operation example 3-4, image data that matches the color or the like of a lower casing 30b of a mobile phone can be appropriately downloaded and acquired, and a casing image in harmony with the color or the like of the lower casing 30b can be displayed on a display panel 208 of the mobile phone. In addition, in the present operation example 3-4, since a selection process is performed on the side of the download server 11, there is no need to perform any special process on the side of the mobile phone 20.

In the Embodiment 3 (including each of the operation examples; the same applies to the following), the casing image to be displayed on a display panel provided in an externally exposed portion of a casing of a mobile phone 20 can be changed to another casing image just by a user performing a predetermined operation on the keys of an operating unit 213. Moreover, the casing image displayed on a display panel 208 maintains its display state even in a non-power-supplied state. Hence, the user can easily change the external design of the mobile phone 20 by performing a key operation on the operating unit 213, without performing a complicated task of changing a replacement part, as in conventional cases. In addition, according to the operation examples 3-1 to 3-4, the quality of design for the external appearance of the whole mobile phone 20 can be improved.
In each of the above-mentioned operation examples of Embodiment 3, it is described the technique for displaying on a display panel 208 a casing image having a polka-dot pattern with a background of the same color as the color of a lower casing 230b where a display panel 208 is not provided; however, other techniques may also be used as long as the technique can provide harmony between a casing image and the color or pattern or a combination thereof of the lower casing 230b to enhance the quality of design for the whole external design.
In the above-mentioned Embodiment 3, it is also described the case in which image data of a casing image is acquired from a download server 11 via a mobile phone communication network 10; however, other acquisition methods may be used. For example, a method may be used in which image data is read and acquired from an external memory medium that is removable from a mobile phone 20, such as a memory card. Specific examples of the external memory medium include an SD memory card, a CF: Compact Flash (registered trademark) memory card, a SmartMedia, a memory stick, and an MMC (Multimedia Card).
In the above-described Embodiment 3, it is also described the case in which the casing image is changed based on image changing condition that there is a key operation on an operating unit 213 by a user or there is an instruction from an application program; however, other image changing conditions can also be adopted. For example, if the image changing condition is that a certain period of time has elapsed, a configuration can be obtained in which the casing image is automatically changed without a user 1 performing any operation.
In the above-described Embodiment 3, it is also described the configuration capable of changing the image displayed on a display panel 208; however, image display means that cannot change the display state of an image once displayed may be used, in place of the display panel 208. In this case, for example, upon purchase of the mobile phone 20, by allowing a user to select an image to be displayed on the image display means of the mobile phone 20, the external design of the mobile phone can be made to match the user's preferences.

While the preferred embodiments of the present invention have been described above, it is understood that various modifications can be made to the disclosed embodiments without departing from the scope or spirit of the present invention and within the scope of technical matters described in the scope of claims.
For example, the present invention can be applied not only to the mobile phones, but also mobile communication terminals such as PHS, phones as automobile phones or the like, portable PDA, etc., by which the same effect can be obtained.

## Claims

1. A mobile communication terminal casing for forming an external wall portion of a mobile communication terminal, said mobile communication terminal casing comprising:
non-power-supplied image display means provided in at least a part of a portion that is exposed externally when being provided to said mobile communication terminal, and being capable of maintaining a display state of an image even in a non-power-supplied state; and
signal receiving means for receiving an electrical signal for allowing an image to be displayed on said non-power-supplied image display means.

2. A mobile communication terminal comprising:
a casing forming an external wall portion; and
memory means for memorizing image data; wherein
non-power-supplied image display means capable of maintaining a display state of an image based on image data memorized in said memory means even in a non-power-supplied state is provided in at least a part of an externally exposed portion of said casing.

3. A mobile communication terminal according to claim 2, said mobile communication terminal comprising:
display control means for performing display control to change an image displayed on said non-power-supplied image display means.

4. A mobile communication terminal according to claim 2 or 3, said mobile communication terminal comprising:
image data selection and storage means for selecting a piece of image data that matches an appearance of said external wall portion from a plurality of pieces of image data memorized in an external memory medium, and for storing the selected image data in said memory means.

5. A mobile communication terminal according to claim 2 or 3, said mobile communication terminal comprising:
image data acquisition and storage means for acquiring image data of an image according to an image acquisition request via a communication network by sending the image acquisition request to a server apparatus having an external memory medium via the communication network, and for storing the image data said the memory means; wherein
said image data acquisition and storage means sends an appearance identification information for identifying appearance of the external wall portion to said server apparatus via the communication network, when acquiring the image data.

6. A mobile communication terminal according to claim 2 or 3, said mobile communication terminal comprising:
processing means for processing image data memorized in said memory means in accordance with the appearance of the external wall portion; wherein
an image based on the image data processed by said processing means is displayed on said non-power-supplied image display means.

7. A server apparatus for sending image data memorized in image data memory means to a mobile communication terminal via a communication network: wherein
said image data memory means memorizes a plurality of pieces of image data corresponding to a plurality of mobile communication terminals having external wall portions of which appearances are different from one another respectively, for an image of a same type; and
said server apparatus comprising
image data reading means for reading image data of an image according to an image acquisition request corresponding to an mobile communication terminal from said image data memory means, based on the image acquisition request received from the mobile communication terminal via the communication network and an appearance identification information for identifying the appearance of external wall portion of the mobile communication terminal, and
image data sending means for sending the image data read by said image data reading means to the mobile communication terminal via the communication network.

8. A server apparatus for sending image data memorized in image data memory means to a mobile communication terminal via a communication network, said server apparatus comprising:
image data processing means for processing image data of an image according to an image acquisition request in accordance with an appearance of external wall portion of the mobile communication terminal which is identified by an appearance identification information, based on the image acquisition request received from the mobile communication terminal via the communication network and the appearance identification information for identifying the appearance of external wall portion of the mobile communication terminal, and
image data sending means foe sending the image data processed by said image data processing means to the mobile communication terminal via the communication network.

9. A mobile communication system comprising a mobile communication terminal and a server apparatus for sending image data memorized in image data memory means to said mobile communication terminal via a communication network: wherein
said mobile communication terminal comprising;
non-power-supplied image display means being provided in at least a part of an externally exposed portion of a casing forming an external wall portion, and being capable of maintaining a display state of an image which is based on image data memorized in said memory means even in a non-power-supplied state;
display control means performing display control to change an image displayed on said non-power-supplied image display means;
data acquiring means for sending an image acquisition request to said server apparatus via the communication network and receiving image data of an image according a to the image acquisition request from said server apparatus via the communication network; and
data storage means for storing the image data acquired by said image data acquiring means in said memory means: and
said server apparatus being configured to read image data of an image according to the image acquisition request received from the mobile communication terminal via the communication network, from the image data storage means, and to send the image data to the mobile communication terminal via the communication network.

10. A mobile communication terminal comprising:
a casing forming an external wall portion;
memory means for memorizing image data; and
control means for executing a program and performing a control in accordance with a content of the program; wherein
non-power-supplied image display means is provided in at least a part of an externally exposed portion of said casing, which is capable of maintaining, even in a non-power-supplied state, a display state of an image which is based on image data memorized in said memory means;
the image data is memorized in said memory means in a state such that the image data is associated with a specific program executable by said control means; and
said control means performs a control to read the image data associated with the specific program from said memory means and display an image which is based on the image data on said non-power-supplied image display means, during execution of the specific program.

11. A mobile communication terminal according to claim 10, said mobile communication terminal comprising:
image data acquisition and storage means for acquiring image data of an image displayed on said non-power-supplied image display means wherein the image data is associated with the specific program, when acquiring the specific program from an external memory medium, from the external memory medium or another external memory medium, and for storing the image data in said memory means.

12. A mobile communication terminal comprising:
a casing forming an external wall portion; and
memory means for memorizing image data; wherein
power-supplied image display means is provided in at least a part of an externally exposed portion of said casing, which cannot maintain a display state of an image in a non-power-supplied state;
non-power-supplied image display means is provided in at least a part of an externally exposed portion of said casing, which is capable of maintaining a display state of an image based on image data memorized in said memory means, even in a non-power-supplied state;
the image data is memorized in said memory means in a state such that the image data is associated with an image displayed on said power-supplied image display means; and
said mobile communication terminal includes a control means for performing a control to read image data associated with the image from said memory means and display an image based on the image data on said non-power-supplied image display means, during an image is displayed on said power-supplied image display means.

13. A mobile communication terminal according to claim 12, said mobile communication terminal comprising:
image data acquisition and storage means for acquiring image data of an image displayed on said non-power-supplied image display means wherein the image data is associated with the image data displayed on said power-supplied image display means, when acquiring image data of the image to be displayed on said power-supplied image display means from an external memory medium, from the external memory medium or other external memory media, and for storing the image data in said memory means.

14. A server apparatus for sending data memorized in data memory means to said mobile communication terminal according to claim 11 via a communication network: wherein
said data memory means memorizes data of the specific program and image data of an image to be displayed on said non-power-supplied image display means in a state such that the image data is associated with the data of the specific program data; and
said server apparatus includes data sending means for reading data of a specific program according to a program acquisition request and image data associated with the data of the specific program from said data memory means, in response to the program acquisition request received from the mobile communication terminal via the communication network, and for sending the read data to said mobile communication terminal via the communication network.

15. A server apparatus sending data memorized in data memory means to said mobile communication terminal according to claim 13 via a communication network: wherein
said data memory means memorizes image data of an image to be displayed on said power-supplied image display means and image data of an image to be displayed on said non-power-supplied image display means in a state such that the image data of an image to be displayed on said non-power-supplied image display means is associated with the image data of an image to be displayed on said power-supplied image display means; and
said server apparatus includes data sending means for reading, from said data memory means, image data according to an image acquisition request and image data of an image displayed on said non-power-supplied image display means wherein the image data of the image is associated with the image data according to the image acquisition request, in response to the image acquisition request received from said mobile communication terminal via the communication network for image data of an image to be displayed on said power-supplied image display means, and for sending the read data to said mobile communication terminal via the communication network.

16. A mobile communication system comprising:
said mobile communication terminal according to claim 11; and
said server apparatus according to claim 14 capable of communicating with said mobile communication terminal via a communication network.

17. A mobile communication system comprising:
said mobile communication terminal according to claim 13; and
said server apparatus according to claim 15 capable of communicating with said mobile communication terminal via a communication network.

18. A mobile communication terminal comprising:
a casing forming an external wall portion;
memory means for memorizing image data; wherein
non-power-supplied image display means capable of maintaining a display state of an image based on image data memorized in said memory means, even in a non-power-supplied state, is provided in at least a part of an externally exposed portion of said casing: and
said mobile communication terminal includes:
appearance identification information memory means for memorizing appearance identification information for identifying a pattern or a color or a combination thereof of the other portion of said casing; and
image data selection and storage means for selecting, from a plurality of pieces of image data memorized in an external memory medium so as to be associated with the appearance identification information, a piece of image data corresponding to the appearance identification information memorized in said appearance identification information memory means, and for storing the selected image data in said memory means.

19. A mobile communication terminal comprising:
a casing forming an external wall portion;
memory means for memorizing image data; wherein
non-power-supplied image display means capable of maintaining a display state of an image based on image data memorized in said memory means, even in a non-power-supplied state, is provided in at least a part of an externally exposed portion of said casing; and
said mobile communication terminal includes processing means for processing image data memorized in said memory means to add or change at least one of a pattern and a color of the image data; wherein an image based on the image data processed by said processing means is displayed on said non-power-supplied image display means.

20. A mobile communication terminal comprising:
a casing forming an external wall portion;
memory means for memorizing image data; wherein
non-power-supplied image display means capable of maintaining a display state of an image based on image data memorized in said memory means, even in a non-power-supplied state, is provided in at least a part of an externally exposed portion of said casing; and
said mobile communication terminal includes image data acquisition and storage means for acquiring image data of an image according to the image acquisition request via the communication network, by sending via a communication network an image acquisition request to a server apparatus having an external memory medium, and for storing the image data in said memory means; wherein
said image data acquisition and storage means sends, when acquiring the image data, appearance identification information for identifying a pattern or a color or a combination thereof of other portion of the casing, to the server apparatus via the communication network.

21. A server apparatus for sending image data memorized in image data memory means to said mobile communication terminal according to claim 20 via a communication network, wherein
said image data memory means memorizes a plurality of pieces of image data in a state such that the pieces of image data are associated with the appearance identification information, respectively: and
said server apparatus includes:
image data reading means for reading, based on the image acquisition request received from said mobile communication terminal via the communication network and the appearance identification information, image data of an image according to the image acquisition request which corresponds to the appearance identification information, from said image data memory means; and
image data sending means for sending the image data read by said image data reading means to said mobile communication terminal via the communication network.

22. A server apparatus for sending image data memorized in image data memory means to said mobile communication terminal according to claim 20 via a communication network, said server apparatus comprising:
image data processing means for performing a process for image data of an image according to an image acquisition request, based on the image acquisition request received from the mobile communication terminal via the communication network and the appearance identification information, to add or change at least one of a pattern and a color of the image data; and
image data sending means sending the image data processed by said image data processing means to the mobile communication terminal via the communication network.

23. A mobile communication system comprising:
said mobile communication terminal according to claim 20; and
said server apparatus according to claim 21 or 22.

## Amended claims

### Amended claims under Art. 19.1 PCT

1. Deleted)

2. Deleted)

3. Deleted)

4. Amended) A mobile communication terminal comprising a casing forming an external wall portion and memory means for memorizing image data: wherein
non-power-supplied image display means capable of maintaining a display state of an image based on image data memorized in said memory means even in a non-power-supplied state is provided in at least a part of an externally exposed portion of said casing;
the mobile communication terminal includes image data acquisition and storage means for acquiring image data of an image according to an image acquisition request via a communication network by sending the image acquisition request to a server apparatus via the communication network, and for storing the image data said the memory means; and
said image data acquisition and storage means
receives an image list including all image IDs corresponding to all pieces of image data which are associated with the image IDs and memorized in the server apparatus via the communication network from the server apparatus,
identifies the image ID associated with said mobile communication terminal among the plurality of received image IDs,
displays only an image list according to the identified image ID, and
sends the image ID of image data selected from the image list, together with the image acquisition request, to the server apparatus via the communication network.

5. Amended) A mobile communication terminal comprising a casing forming an external wall portion and memory means for memorizing image data: wherein
non-power-supplied image display means capable of maintaining a display state of an image based on image data memorized in said memory means even in a non-power-supplied state is provided in at least a part of an externally exposed portion of said casing;
the mobile communication terminal includes image data acquisition and storage means for acquiring image data of an image according to an image acquisition request via a communication network by sending the image acquisition request to a server apparatus via the communication network, and for storing the image data said the memory means; and
said image data acquisition and storage means sends the image acquisition request and a model ID of said mobile communication terminal to the server apparatus via the communication network, when acquiring the image data.

6. Amended) A mobile communication terminal comprising a casing forming an external wall portion and memory means for memorizing image data: wherein
non-power-supplied image display means capable of maintaining a display state of an image based on image data memorized in said memory means even in a non-power-supplied state is provided in at least a part of an externally exposed portion of said casing;
the mobile communication terminal includes
image data acquisition and storage means for acquiring image data of an image according to an image acquisition request via a communication network by sending the image acquisition request to a server apparatus via the communication network, and for storing the image data said the memory means, and
processing means for processing image data memorized in said memory means in accordance with appearance of the external wall portion; and
an image based on the image data processed by said processing means is displayed on said .non-power-supplied image display means.

7. Amended) A server apparatus for sending image data memorized in image data memory means to a mobile communication terminal via a communication network: wherein
said image data memory means memorizes a plurality of pieces of image data corresponding to a plurality of mobile communication terminals of which model IDs are different from one another respectively, for each of plural images with different types; and
said server apparatus comprising
image data reading means for reading image data of an image according to an image acquisition request corresponding to a model ID of the mobile communication terminal, based on the image acquisition request received from the mobile communication terminal via the communication network and the model ID of the mobile communication terminal, and
image data sending means for sending the image data read by said image data reading means to the mobile communication terminal via the communication network.

8. Amended) A server apparatus for sending image data memorized in image data memory means to a mobile communication terminal via a communication network: wherein
said image data memory means memorizes image data of a plurality of images of which types are different from one another; and
said server apparatus comprising
image data processing means for processing image data of an image according to an image acquisition request, based on the image acquisition request received from the mobile communication terminal via the communication network and the model ID of the mobile communication terminal, and
image data sending means for sending the image data processed by said image data processing means to the mobile communication terminal via the communication network.

9. Deleted)

10. Amended) A mobile communication terminal comprising a casing forming an external wall portion, memory means for memorizing image data, and control means for executing a program and performing a control in accordance with a content of the program: wherein
non-power-supplied image display means is provided in at least a part of an externally exposed portion of said casing, which is capable of maintaining, even in a non-power-supplied state, a display state of an image which is based on image data memorized in said memory means;
said memory means memorizes the image data in a state such that the image data is associated with an application program executable by said control means; and
said control means performs a control to read image data associated with the application program from said memory means and display an image based on the image data on said non-power-supplied image display means, during execution of the application program.

11. Amended) A mobile communication terminal according to claim 10, said mobile communication terminal comprising:
image data acquisition and storage means for acquiring image data of an image displayed on said non-power-supplied image display means wherein the image data is associated with the application program, when acquiring the application program from an external memory medium, from the external memory medium or another external memory medium, and for storing the image data in said memory means.

12. Amended) A mobile communication terminal comprising a casing forming an external wall portion and memory means for memorizing image data: wherein
power-supplied image display means is provided in at least a part of an externally exposed portion of said casing, which cannot maintain a display state of an image in a non-power-supplied state;
non-power-supplied image display means is provided in at least a part of an externally exposed portion of said casing, which is capable of maintaining a display state of an image based on image data memorized in said memory means, even in a non-power-supplied state;
said memory means memorizes the image data in a state such that the image data is associated with a standby image or a wallpaper image displayed on said power-supplied image display means; and
said mobile communication terminal includes a control means for performing a control to read image data associated with the standby image or the wallpaper image from said memory means and display an image based on the image data on said non-power-supplied image display means, during the standby image or the wallpaper image is displayed on said power-supplied image display means.

13. Amended) A mobile communication terminal according to claim 12, said mobile communication terminal comprising:
image data acquisition and storage means for acquiring image data of an image displayed on said non-power-supplied image display means wherein the image data is associated with image data of a standby image or a wallpaper image displayed on said power-supplied image display means, when acquiring image data of the standby image or the wallpaper image to be displayed on said power-supplied image display means from an external memory medium, from the external memory medium or another external memory medium, and for storing the image data in said memory means.

14. Amended) A server apparatus for sending data memorized in data memory means to said mobile communication terminal according to claim 11 via a communication network: wherein
said data memory means memorizes data of the application program and image data of an image to be displayed on said non-power-supplied image display means in a state such that the image data is associated with the application program data; and
said server apparatus includes data sending means for reading data of an application program according to a program acquisition request and image data associated with the application program data from said data memory means, in response to the program acquisition request received from the mobile communication terminal via the communication network, and for sending the read data to said mobile communication terminal via the communication network.

15. Amended) A server apparatus for sending data memorized in data memory means to said mobile communication terminal according to claim 13 via a communication network: wherein
said data memory means memorizes image data of a standby image or a wallpaper image displayed on said power-supplied image display means and image data of an image displayed on said non-power-supplied image display means, in a state such that the image data of the image displayed on said non-power-supplied image display means is associated with the image data of the image displayed on said power-supplied image display means; and
said server apparatus includes data sending means for reading, from said data memory means, image data according to an image acquisition request and image data of an image displayed on said non-power-supplied image display means wherein the image data of the image displayed on said non-power-supplied image display means is associated with the image data according to the image acquisition request, in response to the image acquisition request for image data of the standby image or the wallpaper image to be displayed on said power-supplied image display means wherein the request is received from said mobile communication terminal via the communication network, and for sending the read data to said mobile communication terminal via the communication network.

16. A mobile communication system comprising:
said mobile communication terminal according to claim 11; and
said server apparatus according to claim 14 capable of communicating with said mobile communication terminal via a communication network.

17. A mobile communication system comprising:
said mobile communication terminal according to claim 13; and
said server apparatus according to claim 15 capable of communicating with said mobile communication terminal via a communication network.

18. Deleted)

19. Deleted)

20. Deleted)

21. Deleted)

22. Deleted)

23. Deleted)
